# EUROPÄISCHE PATENTSCHRIFT

(11) **EP 3 494 017 B1**
(45) Veröffentlichungstag und Bekanntmachung des Hinweises auf die Patenterteilung: **13.12.2023**
(21) Anmeldenummer: 16756612.4
(22) Anmeldetag: 04.08.2016
(51) Int. Cl.: B60S 3/04

(54) **SYSTEM UND VERFAHREN ZUR FAHRZEUGPFLEGE SOWIE VERWENDUNG EINES DERARTIGEN SYSTEMS**
SYSTEM AND METHOD FOR VEHICLE CARE, AND USE OF A SYSTEM OF THIS TYPE
SYSTÈME ET PROCÉDÉ D'ENTRETIEN DES VÉHICULES ET UTILISATION D'UN TEL SYSTÈME

(43) Veröffentlichungstag der Anmeldung: 12.06.2019
(73) Patentinhaber: Alfred Kärcher SE & Co. KG, 71364 Winnenden (DE)
(72) Erfinder: FRIEDERICH, Andreas, 70499 Stuttgart (DE); HAYN, Henning, 70190 Stuttgart (DE); KUTZ, Benjamin, 74372 Sersheim (DE); SCHECHTERLE, Michael, 71540 Murrhardt (DE)
(74) Vertreter: DTS Patent- und Rechtsanwälte Schnekenbühl und Partner mbB
(86) Internationale Anmeldenummer: PCT/EP2016/068683
(87) Internationale Veröffentlichungsnummer: WO 2018/024336

(56) Entgegenhaltungen:
- DE-A1- 10 322 765
- DE-A1-102008 036 660
- DE-A1-102014 112 123
- JP-A- S6 099 746

## Beschreibung

Die Erfindung betrifft ein System zur Fahrzeugpflege und insbesondere Fahrzeugreinigung, umfassend mindestens eine Fahrzeugpflegeeinrichtung und eine Steuereinrichtung, wobei Fahrzeuge zur mindestens einen Fahrzeugpflegeeinrichtung verbringbar und von dieser entfernbar sind und die Steuereinrichtung zur Kommunikation mit nicht-benutzergeführten Fahrzeugen ausgestaltet ist.

Außerdem betrifft die Erfindung ein Verfahren zur Fahrzeugpflege unter Einsatz eines derartigen Systems.

Weiter betrifft die Erfindung eine Verwendung eines derartigen Systems, beispielsweise bei einer Mietfahrzeugstation oder bei einem Autohof.

Ein System der eingangs genannten Art erlaubt die Pflege von Fahrzeugen, wobei unter "Pflege" vorliegend insbesondere die Reinigung der Fahrzeuge außen und/oder innen sowie das Auffüllen, Wechseln oder das Ablassen eines Betriebsstoffes (z. B. Treibstoff, Scheibenreiniger, Öl, Luft, Energie einer Batterie...) oder Tauschteils (z. B. Filter, Batterie...) für das Fahrzeug verstanden werden kann.

Die DE 103 22 765 A1 beschreibt einen automatisierten Speditionshof für Lastkraftwagen. An den Speditionshof übergebene Fahrzeuge werden unter Ansteuerung durch die Steuereinrichtung zunächst zu einer Entladestation, anschließend zu einer Tankstation und vor der Übergabe an einen Fahrzeugführer zu einer Beladestation verbracht. Je nach Bedarf, der bei der Entgegennahme des Fahrzeuges am Speditionshof ermittelt werden kann, werden Fahrzeuge nach dem Entladen zu einer Waschstation gefahren und dort gereinigt, bevor eine Verbringung zur Tankstation erfolgt. Das in der DE 103 22 765 A1 beschriebene Verfahren unterliegt in der Praxis erheblichen Einschränkungen. Aufgrund der hohen Verweilzeit der Lastkraftwagen in der Entladestation, der Waschstation und der Tankstation eignet sich das Verfahren nur bei verhältnismäßig geringen Durchlaufzahlen. Bei höherem Aufkommen kann bereits die Entgegennahme von Lastkraftwagen am Speditionshof zu langen Wartezeiten und, hierdurch bedingt, zu Staus führen.

In der DE 10 2012 016 039 A1 ist eine Waschstraße beschrieben, in die ein Fahrzeug autonom einfahren kann. Informationen zum Steuern des Fahrzeugs werden von der Waschanlage an das Fahrzeug übertragen.

Ein Verfahren zum Betreiben eines Fahrzeugs, bei dem sich das Fahrzeug nach Ankunft einer befahrbaren Infrastruktur bei einem Infrastrukturverwaltungsserver für die Infrastruktur anmeldet, ist in der DE 10 2014 224 124 A1 beschrieben. Das Fahrzeug empfängt vom Infrastrukturverwaltungsserver Daten, basierend auf welchen das Fahrzeug auf der Infrastruktur von einer Startposition zu einer Zielposition fährt.

In der DE 10 2008 036 660 A1 wird beschrieben, wie in einem automatisierten Speditions-, Betriebs- und/oder Logistikhof Abläufe zum Verfahren autonom fahrender Fahrzeuge gesteuert bzw. geregelt werden können. Mit der Übergabe des Fahrzeugs wird zunächst ein Plan anzufahrender Stationen erstellt, wobei als Stationen eine Entladestation, eine Wartungsstation oder eine Tankstation vorgesehen sind. Basierend auf dem Plan wird eine Terminplanung ermittelt. Zur Minimierung von Fahrzeiten wird eine optimale Route berechnet und darauf basierend ein Raum-Zeit-Plan (RZP). Anhand des RZPs kann bestimmt werden, welches Fahrzeug sich wann an welchem Ort des Speditionshofs befindet, wodurch Überschneidungen bei der Routenplanung erkannt und durch Neuplanungen der Routen vermieden werden können.

Die DE 10 2014 112 123 A1 beschreibt eine Waschanlage für Fahrzeuge mit mindestens einem Industrieroboter, der einen schwenkbaren Roboterarm und ein daran angeordnetes Werkzeug zum Waschen eines Fahrzeugs aufweist. Das Fahrzeug wird vom Fahrzeugführer übergeben und von einem Mitarbeiter der Waschanlage zum Waschplatz gefahren. Die Reihenfolge der Fahrzeugwäsche wird durch eine Steuerung festgelegt. Hochwertige Waschprogramme werden mit einer verkürzten Wartezeit vergütet.

Aufgabe der vorliegenden Erfindung ist es, ein System und ein Verfahren zur Fahrzeugpflege sowie die Verwendung eines Systems bereitzustellen, bei dem bzw. der eine effiziente Pflege von Fahrzeugen durchführbar ist.

Diese Aufgabe wird durch ein erfindungsgemäßes System zur Fahrzeugpflege und insbesondere Fahrzeugreinigung mit den Merkmalen von Anspruch 1 gelöst.

Beim erfindungsgemäßen System besteht die Möglichkeit, die Reihenfolge, in der die den jeweiligen Fahrzeugen zugeordneten Fahrzeugpflegeaufträge abgearbeitet werden, mittels der Steuereinrichtung zu verändern. Auf aktuelle Zustände der mindestens einen Fahrzeugpflegeeinrichtung, deren Auslastung (beispielsweise bei einer Mehrzahl von Fahrzeugpflegeeinrichtungen), unterschiedliche Dauern der Pflege von Fahrzeugen, unterschiedliche Anzahlen zu pflegender Fahrzeuge - um nur beispielhaft einige äußere Einflüsse zu nennen - kann bei dem erfindungsgemäßen System durch Anpassung der Reihenfolge der Fahrzeugpflegeaufträge flexibel reagiert werden. Anders als bei dem in der DE 103 22 765 A1 beschriebenen System, welches die unveränderliche sequenzielle Abarbeitung von Waschaufträgen und Tankaufträgen vorsieht, wird dadurch eine effiziente Abarbeitung der Fahrzeugpflegeaufträge ermöglicht.

Alternativ oder ergänzend besteht beim erfindungsgemäßen System die Möglichkeit, den in zumindest einem Fahrzeugpflegeauftrag hinterlegten Umfang der Fahrzeugpflege zu verändern. Der in einem Fahrzeugpflegeauftrag hinterlegte Umfang der Fahrzeugpflege, nachfolgend auch abkürzend "Umfang der Fahrzeugpflege" genannt, kann insbesondere eine der nachfolgend genannten Informationen aufweisen: Art der Fahrzeugpflege für ein bestimmtes Fahrzeug, Intensität der Fahrzeugpflege, Dauer der Fahrzeugpflege, Angabe der Menge und/oder Beschaffenheit von Betriebsstoffen und/oder Tauschteilen, Einsatz von Hilfsmitteln oder Werkzeugen bei der Erbringung der Fahrzeugpflege. Ist beispielsweise als Fahrzeugpflegeeinrichtung eine Einrichtung zur Fahrzeugreinigung vorgesehen, kann der Umfang der Fahrzeugpflege beispielsweise Informationen über die Intensität der Reinigung, die Dauer der Reinigung, den Einsatz eines Reinigungswerkzeugs und/oder, bei Fahrzeugwaschanlagen, die Angabe eines Reinigungsprogramms umfassen. Die Möglichkeit, den Umfang der Fahrzeugpflege zu verändern, verleiht dem System eine hohe Vielseitigkeit. Beispielsweise kann zu Stoßzeiten, wenn eine hohe Anzahl von Fahrzeugen zu pflegen ist, der Umfang der Fahrzeugpflege ausgewählter oder aller Fahrzeuge reduziert und dadurch die Durchlaufzeit für Fahrzeuge durch die mindestens eine Fahrzeugpflegeeinrichtung verringert werden. Umgekehrt kann vorteilhafterweise bei geringen Stückzahlen der Umfang der Fahrzeugpflege gesteigert werden und eine bessere Fahrzeugpflege durchgeführt werden.

Es besteht vorzugsweise die Möglichkeit, dass mit der Steuereinrichtung die Reihenfolge der Abarbeitung aller Fahrzeugpflegeaufträge veränderbar ist und/oder der jeweilige Umfang der Fahrzeugpflege aller Fahrzeugpflegeaufträge. Es versteht sich, dass sich die Umfänge der Fahrzeugpflege unterschiedlicher Fahrzeugpflegeaufträge voneinander unterscheiden können.

Die Steuereinrichtung ist zur Kommunikation mit nicht-benutzergeführten Fahrzeugen ausgestaltet, die selbstfahrend und selbstlenkend, d. h. autonom, oder unter Fernsteuerung durch die Steuereinrichtung bewegbar sein können. Im Hinblick auf eine effiziente Abwicklung der Fahrzeugpflege kann die Steuereinrichtung dadurch, ohne dass es eines Fahrers für derartige Fahrzeuge bedarf, die diesen Fahrzeugen zu koordinierten Fahrzeugpflegeaufträge so veränderbar koordinieren, dass die Fahrzeuge zum optimalen Zeitpunkt zu einer jeweiligen Fahrzeugpflegeeinrichtung verbracht, entsprechend dem Fahrzeugpflegeauftrag behandelt und nach Beendigung der Fahrzeugpflege wieder von dieser entfernt oder abgefahren werden.

In die Erfindung fließt die Überlegung mit ein, dass Anlagen umfassend ein derartiges System zur Fahrzeugpflege mit einer hohen Anzahl von zu verwaltenden und zu pflegenden Fahrzeugen konfrontiert sein können. Ein Beispiel für eine derartige Anlage ist eine Mietfahrzeugstation. Mietfahrzeugstationen beispielsweise an Flughäfen mit hohem Passagieraufkommen verwalten eine hohe Anzahl von Fahrzeugen, die zu unterschiedlichen Zeiten von Fahrzeugmietern zurückgegeben oder abgeholt werden, wobei hohe Fluktuationen aufgrund der Tageszeit und/oder des Wochentages entstehen können, jedoch beispielsweise auch bei Störungen im öffentlichen Personenverkehr. Die Fahrzeuge bedürfen nach der Entgegennahme und vor der erneuten Vermietung der Pflege, insbesondere der Reinigung und/oder der Betankung. Da die Verweildauer der Fahrzeuge an der Mietfahrzeugstation zur Gewinnoptimierung so gering wie möglich sein sollte, ist eine effiziente Abarbeitung der Fahrzeugpflegeaufträge erforderlich. Erschwerend kommt hinzu, dass die Rückgabe an sich erwarteter und bereits verplanter Fahrzeuge entfallen kann, wodurch (auch kurzfristig) unterschiedlicher Bedarf an Fahrzeugen unterschiedlichen Typs vorhanden ist. Durchlaufzeiten sind daher zu minimieren und die Fahrzeugpflege zu optimieren. Jedoch ist der Einsatz des erfindungsgemäßen Systems an einer Mietfahrzeugstation nur beispielhaft, dieses eignet sich, ebenso wie das erfindungsgemäße Verfahren und die erfindungsgemäße Verwendung, auch zum Einsatz andernorts, an dem die Pflege von Fahrzeugen an der mindestens einen Fahrzeugpflegeeinrichtung von einer Steuereinrichtung zu koordinieren ist.

Die Steuereinrichtung umfasst eine Fahrzeugsteuereinheit und eine Planungseinheit, wobei die Fahrzeugsteuereinheit zur Kommunikation mit nicht-benutzergeführten Fahrzeugen ausgestaltet ist und Fahrzeugpflegeaufträge von der Planungseinheit koordinierbar sind, wobei die Planungseinheit mit mindestens einer Steuereinheit, die der mindestens einen Fahrzeugpflegeeinrichtung zugeordnet oder von dieser umfasst ist, in Kommunikation steht zur Übermittlung von Fahrzeugpflegeaufträgen an die mindestens eine Steuereinheit und/oder zum Empfang von Zustandsmeldungen über die mindestens eine Fahrzeugpflegeeinrichtung durch die mindestens eine Steuereinheit. Beispielsweise werden nicht-benutzergeführte Fahrzeuge unter Ansteuerung durch die Fahrzeugsteuereinheit zur Fahrzeugpflegeeinrichtung verbracht und/oder von dieser entfernt. Ein Fahrzeugpflegeauftrag für die mindestens eine Fahrzeugpflegeeinrichtung kann an deren Steuereinheit übermittelt werden. Die Abarbeitung kann durch die Steuereinheit ausgelöst werden. Die Steuereinheit kann Statusinformationen oder Zustandsmeldungen an die Planungseinheit übermitteln. Jeder Fahrzeugpflegeeinrichtung kann eine eigene Steuereinheit zugeordnet sein.

Bei einer vorteilhaften Ausführungsform kann eine Mehrzahl von Fahrzeugpflegeeinrichtungen vorgesehen sein, wobei Fahrzeugen mehr als ein Fahrzeugpflegeauftrag zur Pflege an einer jeweiligen Fahrzeugpflegeeinrichtung zugeordnet sein kann. Zumindest ein Teil der Fahrzeuge kann mit mehr als einem Fahrzeugpflegeauftrag verknüpft sein, beispielsweise Reinigung, Tanken oder Batterieladen, Ölwechsel...

Vorteilhafterweise ist von der Steuereinrichtung die Reihenfolge der Abarbeitung mehrerer einem Fahrzeug zugeordneter Fahrzeugpflegeaufträge und/oder die Reihenfolge der Abarbeitung von unterschiedlichen Fahrzeugen zugeordneten Fahrzeugpflegeaufträgen veränderbar. Sind beispielsweise mehrere Fahrzeugpflegeeinrichtungen unterschiedlicher Art vorhanden - darauf wird noch eingegangen -, kann die Steuereinrichtung Fahrzeugpflegeaufträge effizient koordinieren und deren Abarbeitung steuern. Sind zu einem Fahrzeug mehrere Fahrzeugpflegeaufträge vorhanden, kann die Steuereinrichtung vorzugsweise einen Fahrzeugpflegeauftrag an einer verfügbaren Fahrzeugpflegeeinrichtung ausführen lassen und zum Beispiel einem an sich zuvor geplanten Fahrzeugpflegeauftrag an einer weiteren Fahrzeugpflegeeinrichtung vorziehen, sollte diese nicht verfügbar sein.

Günstig ist es, wenn die Reihenfolge der Abarbeitung von Fahrzeugpflegeaufträgen von einer Bedienperson des Systems mittels eines Datenverarbeitungsgerätes veränderbar ist. Eine Bedienperson, beispielsweise ein Aufseher, kann alternativ oder ergänzend zur Steuereinrichtung im Hinblick auf eine optimierte Fahrzeugpflege die Reihenfolge der Abarbeitung der Fahrzeugpflegeaufträge verändern. Die Bedienperson kann sich dabei eines Datenverarbeitungsgerätes für die Steuereinrichtung bedienen, beispielsweise eines Terminals, Computers oder einer Website. Denkbar ist insbesondere auch die Nutzung eines insbesondere tragbaren Datenverarbeitungsgerätes, beispielsweise eines Tablet-Computers, Laptop-Computers oder eines Smartphones.

Günstig ist es, wenn die Reihenfolge der Abarbeitung von Fahrzeugpflegeaufträgen von der Steuereinrichtung und/oder durch eine Bedienperson des Systems festlegbar ist. Beispielsweise wird die Reihenfolge der Abarbeitung initial bei der Entgegennahme von Fahrzeugen an einer das System umfassenden Anlage festgelegt. Die Möglichkeit, dass die Reihenfolge durch die Steuereinrichtung und/oder eine Bedienperson festgelegt ist, verleiht dem System eine hohe Vielseitigkeit.

Vorteilhafterweise ist ein in zumindest einem Fahrzeugpflegeauftrag hinterlegter Umfang der Fahrzeugpflege durch eine Bedienperson des Systems veränderbar. Bevorzugt können die Umfänge der Fahrzeugpflege aller Fahrzeugpflegeaufträge von der Bedienperson veränderbar sein.

Dementsprechend ist vorzugsweise die Möglichkeit gegeben, einen Umfang betreffend eine Reinigung für das Fahrzeug von der Steuereinrichtung und/oder durch eine Bedienperson zu verändern.

Bei einer vorteilhaften Ausführungsform des Systems ist als Fahrzeugpflegeeinrichtung mindestens eine Einrichtung zur Fahrzeugreinigung vorgesehen. Vorteilhafterweise ist eine Mehrzahl von Einrichtungen zur Fahrzeugreinigung vorgesehen.

Die Einrichtung zur Fahrzeugreinigung kann bei einer bevorzugten Ausführungsform eine Fahrzeugwaschanlage sein oder umfassen. Die Fahrzeugwaschanlage kann als Portalwaschanlage ausgestaltet sein oder als Waschstraße. Es kann eine Mehrzahl von Portalwaschanlagen und/oder eine Mehrzahl von Waschstraßen vorhanden sein.

Alternativ oder ergänzend kann die Einrichtung zur Fahrzeugreinigung eine Innenraumreinigungseinrichtung zum Reinigen eines Fahrzeuginnenraums sein oder umfassen.

Bei einer vorteilhaften Ausführungsform kann die Einrichtung zur Fahrzeugreinigung mindestens ein von einer Bedienperson geführtes Reinigungswerkzeug aufweisen, oder ein solches kann daran angeordnet sein. Unter Einsatz des Reinigungswerkzeuges kann die Bedienperson eine Reinigung des Fahrzeugs durchführen. Das Reinigungswerkzeug kann beispielsweise ein Waschwerkzeug, ein Saugreinigungswerkzeug oder ein Wischwerkzeug sein oder umfassen. Beispielsweise ist ein Hochdruckreinigungsgerät zur manuellen Reinigung durch die Bedienperson vorgesehen.

Alternativ oder ergänzend kann als Fahrzeugpflegeeinrichtung eine Einrichtung zum Auffüllen, Wechseln und/oder Ablassen eines Betriebsstoffes oder Tauschteils des Fahrzeuges vorgesehen sein. Eine derartige Einrichtung kann insbesondere eine Betankungseinrichtung für das Fahrzeug sein. Denkbar ist auch eine Batterieladeeinrichtung oder Tauscheinrichtung für eine Fahrzeugbatterie. Unter Betriebsstoff wird vorliegend zum Beispiel Treibstoff, Scheibenreiniger, Öl, Energie einer Batterie, Luft oder ein Gas zum Befüllen von Fahrzeugreifen verstanden.

Günstig ist es, wenn mindestens eine Fahrzeugpflegeeinrichtung zur autonomen Pflege des Fahrzeuges, zumindest teilweise, ausgestaltet ist. Dies gibt die Möglichkeit, die Fahrzeugpflege ohne Zutun einer Bedienperson durchzuführen. Das Fahrzeug kann selbsttätig von der Fahrzeugpflegeeinrichtung gepflegt werden. Denkbar ist, dass die Fahrzeugpflegeeinrichtung die Fahrzeugpflege selbsttätig startet und/oder beendet, nach Ankunft des Fahrzeugs an der Fahrzeugpflegeeinrichtung bzw. Beendigung des Pflegevorgangs. Unter "autonomer Pflege" kann vorliegend allerdings auch verstanden werden, dass der Pflegevorgang von einer Bedienperson in Gang gesetzt wird bzw. durch eine Bedienperson beendet wird, ansonsten aber selbsttätig von der Fahrzeugpflegeeinrichtung durchgeführt wird.

Die Fahrzeugpflegeeinrichtung kann von der Steuereinrichtung Informationen zum Starten der Fahrzeugpflege und/oder zu deren Beendigung empfangen. Die Fahrzeugpflegeeinrichtung kann der Steuereinrichtung Informationen über den Status der Fahrzeugpflege übermitteln. Die Steuereinrichtung kann als Bestandteil eine an oder in der Fahrzeugpflegeeinrichtung angeordnete Steuereinheit aufweisen.

Eine autonome Pflege des Fahrzeugs ist vorzugsweise mittels einer Einrichtung zur Fahrzeugreinigung durchführbar, insbesondere einer Fahrzeugwaschanlage.

Bei einer andersartigen vorteilhaften Ausführungsform des Systems ist es günstig, wenn die Fahrzeugpflegeeinrichtung derart ausgestaltet ist, dass eine Fahrzeugpflege, zumindest teilweise, unter Einsatz einer Bedienperson erfolgt. Dies ist beispielsweise bei einer Reinigungseinrichtung möglich, bei der eine Bedienperson ein Reinigungswerkzeug zur Innen- oder Außenreinigung einsetzt. Auch eine Betankung oder ein Batterieladen durch eine Bedienperson ist denkbar.

Von Vorteil ist es, wenn die Reihenfolge der Abarbeitung der Fahrzeugpflegeaufträge und/oder der Umfang der Fahrzeugpflegeaufträge an zumindest einer Fahrzeugpflegeeinrichtung von der Steuereinrichtung im Hinblick auf einen hohen Durchsatz von Fahrzeugen bestimmt oder verändert wird. Die Reihenfolge der Abarbeitung und/oder der Umfang der Fahrzeugpflegeaufträge kann von der Steuereinrichtung dahingehend optimiert werden, dass pro Zeiteinheit eine möglichst hohe Anzahl von Fahrzeugen an mindestens einer und vorzugsweise allen Fahrzeugpflegeeinrichtungen gepflegt wird. Zu diesem Zweck kann die Steuereinrichtung insbesondere Informationen darüber heranziehen, zu welchem Zeitpunkt wie viele Fahrzeuge zu welcher Art von Pflege zu berücksichtigen sind und vorzugsweise jeweilige Pflegedauern und/oder die Auslastung von Fahrzeugpflegeeinrichtungen berücksichtigen.

Von Vorteil ist es, wenn die Reihenfolge der Abarbeitung der Fahrzeugpflegeaufträge und/oder der Umfang von Fahrzeugpflegeaufträgen an zumindest einer Fahrzeugpflegeeinrichtung von der Steuereinrichtung im Hinblick auf zumindest eines der Folgenden bestimmt oder verändert wird:
- geringe Wartezeit für ein Fahrzeug an der Fahrzeugpflegeeinrichtung vor der Aufnahme der Fahrzeugpflege, um Stockungen vor dieser zu vermeiden.
- Möglichst stockungsarme Verbringung von Fahrzeugen zu Fahrzeugpflegeeinrichtungen, um etwaige Fahrwege für die Fahrzeuge an einer das System umfassenden Anlage freizuhalten.
- Möglichst stockungsarme Abfuhr von Fahrzeugen von der Fahrzeugpflegeeinrichtung, um den letztgenannten Vorteil ebenfalls zu erzielen.

Bei dem System können vorzugsweise auch benutzergeführte Fahrzeuge gepflegt werden. Ein stockungsarmer Transport von Fahrzeugen zur Fahrzeugpflegeeinrichtung und/oder die Abfuhr von dieser sowie eine möglichst geringe Wartezeit erweist sich dabei als besonders vorteilhaft für einen effizienten Einsatz von Personal. Überflüssige Wartezeiten und damit eine Vergeudung von Arbeitszeit von Bedienpersonal können dadurch nach Möglichkeit vermieden werden.

Von Vorteil ist es, wenn die Reihenfolge der Abarbeitung der Fahrzeugpflegeaufträge und/oder der in einem Fahrzeugpflegeauftrag hinterlegte Umfang der Fahrzeugpflege von der Steuereinrichtung auf Basis des Fahrzeugpflegeauftrages im Hinblick auf das Ergebnis der Fahrzeugpflege bestimmt oder verändert wird. Beispielsweise kann der Umfang der Fahrzeugpflege zur Verringerung einer Durchlaufzeit der Fahrzeuge verringert oder zur Optimierung der Fahrzeugpflege gesteigert werden. Dies kann sich insbesondere bei der Fahrzeugreinigung als vorteilhaft erweisen.

Von der Steuereinrichtung kann zumindest eines der Folgenden abhängig von der Steuereinrichtung zuführbarer oder von ihr selbsttätig ermittelbarer Informationen bestimmbar oder veränderbar sein:
- die Reihenfolge der Abarbeitung der Fahrzeugpflegeaufträge;
- der in einem Fahrzeugpflegeauftrag hinterlegte Umfang der Fahrzeugpflege;
- Zeitpunkte der Abarbeitung von Fahrzeugpflegeaufträgen;
- die Zuweisung eines jeweiligen Fahrzeugpflegeauftrages zu einer bestimmten Fahrzeugpflegeeinrichtung, sofern eine Mehrzahl von Fahrzeugpflegeeinrichtungen gleicher Art oder Gattung vorhanden ist, beispielsweise eine Mehrzahl von Fahrzeugwaschanlagen oder eine Mehrzahl von Betankungseinrichtungen.

Nachfolgend wird auf unterschiedliche Arten der von der Steuereinrichtung zuführbaren oder von ihr selbsttätig ermittelbaren Informationen eingegangen, die für sich allein oder in Kombination mit zumindest einer weiteren der nachfolgend genannten Informationen eine der vorstehend genannten Handlungen der Steuereinrichtung auslösen können.

Die Informationen können Angaben über die Beschaffenheit des Fahrzeugs als benutzergeführtes Fahrzeug oder nicht-benutzergeführtes Fahrzeug sein oder umfassen.

Die Informationen können die erwartete Ankunftszeit eines Fahrzeuges an einer das System aufweisenden Anlage umfassen.

Die Informationen können die tatsächliche Ankunftszeit eines Fahrzeuges an einer das System aufweisenden Anlage umfassen.

Die Informationen können die erwartete Ankunftszeit eines Fahrzeuges an der mindestens einen Fahrzeugpflegeeinrichtung sein oder umfassen, wobei beispielsweise Verbringungszeiten für das Fahrzeug von einem Stellplatz zur Fahrzeugpflegeeinrichtung berücksichtigt werden können.

Die Informationen können die tatsächliche Ankunftszeit eines Fahrzeuges an der mindestens einen Fahrzeugpflegeeinrichtung sein oder umfassen.

Die Informationen können die erwartete und/oder tatsächliche Anzahl zu pflegender Fahrzeuge sein oder umfassen.

Die Informationen können die erwartete und/oder tatsächliche Dauer der Abarbeitung eines Fahrzeugpflegeauftrages an der mindestens einen Fahrzeugpflegeeinrichtung und/oder an mindestens einer Fahrzeugpflegeeinrichtung sein oder umfassen.

Die Informationen können die Auslastung der mindestens einen Fahrzeugpflegeeinrichtung sein oder umfassen.

Die Informationen können den Wochentag einer geplanten oder durchgeführten Fahrzeugpflege sein oder umfassen, wobei vorzugsweise zu Stoßzeiten der Umfang der Fahrzeugpflegeaufträge verringerbar sein kann. Um eine Abwicklung der Fahrzeugpflegeaufträge zu Stoßzeiten sicherzustellen, kann vorgesehen sein, dass der Umfang der Fahrzeugpflege von der Steuereinrichtung veränderbar ist.

Die Informationen können die Tageszeit einer geplanten oder durchgeführten Fahrzeugpflege sein oder umfassen, wobei vorzugsweise zu Stoßzeiten der Umfang der Fahrzeugpflegeaufträge verringerbar ist.

Stoßzeiten können beispielsweise bei einer das System umfassenden Mietfahrzeugstation insbesondere Montagvormittag und Freitagnachmittag oder Freitagabend sein.

Die Informationen können Urlaubszeiten oder Nichturlaubszeiten sein oder umfassen.

Die Informationen können Auflagen betreffend Arbeitszeiten von Bedienpersonen sein oder umfassen. Hierbei ist es günstig, wenn die Pflege benutzergeführter Fahrzeuge tagsüber, zum Beispiel zu Regelarbeitszeiten, durchführbar ist. Die Pflege nicht-benutzergeführter Fahrzeuge kann demgegenüber auch nachts durchführbar sein. Dies senkt auch die Personalkosten. Alternativ oder ergänzend wird eine Fahrzeugpflegeeinrichtung unter Einsatz einer Bedienperson vorteilhafterweise tagsüber eingesetzt, beispielsweise während der Regelarbeitszeiten, und eine autonome Fahrzeugpflegeeinrichtung ist auch nachts einsetzbar.

Die Informationen können Auflagen betreffend Betriebszeiten der mindestens einen Fahrzeugpflegeeinrichtung sein oder umfassen, beispielsweise hinsichtlich Schallschutz.

Die Informationen können Kosten für Energie und Verbrauchsmittel, insbesondere Wasser, die für den Betrieb der mindestens einen Fahrzeugpflegeeinrichtung erforderlich sind, sein oder umfassen. Die Fahrzeugpflege wird vorzugsweise zu Zeiten geringer Kosten durchgeführt.

Die Informationen können Informationen über Meldungen bei der Abarbeitung von Fahrzeugpflegeaufträgen sein oder umfassen, die der Steuereinrichtung von der Fahrzeugpflegeeinrichtung oder von einer Bedienperson der Fahrzeugpflegeeinrichtung übermittelt werden. Beispielsweise werden Statusmeldungen betreffend die Abarbeitung von Fahrzeugpflegeaufträgen an die Steuereinrichtung übermittelt.

Die Informationen können Informationen über etwaige Service- oder Wartungszeiten oder Störungen der mindestens einen Fahrzeugpflegeeinrichtung sein oder umfassen. In dem Fall, dass eine Fahrzeugpflegeeinrichtung außer Betrieb gesetzt ist, kann die Steuereinrichtung Fahrzeugpflegeaufträge vorzugsweise Fahrzeugpflegeaufträge einer anderen Fahrzeugpflegeeinrichtung zuweisen.

Die Informationen können Informationen über etwaige Störungen oder Einschränkungen des Betriebs von öffentlichen Verkehrsmitteln jeglicher Art oder im öffentlichen Verkehr (beispielsweise aufgrund von Streiks) sein oder umfassen. Im Fall von Störungen kann, beispielsweise bei einer Mietfahrzeugstation, mit erhöhtem Fahrzeugbedarf gerechnet werden, so dass die Abarbeitung der Fahrzeugpflegeaufträge angepasst wird.

Die Informationen können Informationen über Streik oder anderweitig bedingte Ausfälle (etwa durch Krankheit) von Bedienpersonal von Fahrzeugen oder der mindestens einen Fahrzeugpflegeeinrichtung sein oder umfassen. Streikt beispielsweise Fahrpersonal für benutzergeführte Fahrzeuge, kann die Steuereinrichtung Fahrzeugpflegeaufträge für nicht-benutzergeführte Fahrzeuge vorziehen.

Bei einer vorteilhaften Ausführungsform des Systems ist es günstig, wenn als Fahrzeugpflegeeinrichtung eine Einrichtung zur Fahrzeugreinigung vorgesehen ist und wenn die Reihenfolge der Abarbeitung der Fahrzeugpflegeaufträge und/oder der Umfang der Fahrzeugreinigung im Hinblick auf eine Basis- oder Grundreinigung der Fahrzeuge oder im Hinblick auf eine maximale Reinigungsleistung bestimmt wird. Der Umfang der Fahrzeugreinigung ist bei dieser Ausführungsform der "Umfang der Fahrzeugpflege".

Günstig ist es, wenn als Fahrzeugpflegeeinrichtung eine Einrichtung zur Fahrzeugreinigung vorgesehen ist und wenn ein Reinigungsbedarf für das Fahrzeug bestimmbar ist im Hinblick auf die Hinterlegung eines Umfanges der Fahrzeugreinigung im Fahrzeugpflegeauftrag zur bedarfsabhängigen Reinigung des Fahrzeuges. Durch Einschätzung des Reinigungsbedarfs kann der erforderliche Umfang der Fahrzeugreinigung im Fahrzeugpflegeauftrag hinterlegt werden, um die Abarbeitung von Fahrzeugreinigungsaufträgen zu optimieren. Beispielsweise kann eine Fahrzeugreinigung nur in dem erforderlichen Umfang durchgeführt und dadurch die Dauer der Fahrzeugpflege minimiert und Ressourcen gespart werden.

Das System weist vorteilhafterweise eine Erfassungseinrichtung für Fahrzeuge auf, die insbesondere mindestens eine Kamera umfasst, und der Reinigungsbedarf ist bevorzugt von der Steuereinrichtung abhängig von einem Signal der Erfassungseinrichtung bestimmbar. Dies ermöglicht es, den Reinigungsbedarf automatisch ohne Zutun eines Benutzers zu ermitteln. Das Fahrzeug wird, beispielsweise bei der Übergabe, von der Erfassungseinrichtung erfasst. Beispielsweise wird hierbei zumindest eine Kamera eingesetzt, um den Fahrzeugzustand optisch zu ermitteln und der Steuereinrichtung ein diesbezügliches Signal bereitzustellen.

Alternativ oder ergänzend ist es günstig, wenn der Reinigungsbedarf von der Steuereinrichtung abhängig von zumindest einem der Folgenden ermittelbar ist:
- Fahrzeugtyp;
- Fahrzeugalter;
- Zeitpunkt seit der letzten Reinigung;
- Fahrtleistung seit der letzten Reinigung;
   und/oder, insbesondere bei Mietfahrzeugen,
- Wetter am Ort der Nutzung, Anmietung oder Abgabe des Fahrzeugs;
- Straßenzustand am Ort der Nutzung, Anmietung oder Abgabe des Fahrzeugs;
- vorangegangene Mietdauer;
- vorgesehene folgende Mietdauer;
- letzter Fahrzeugmieter;
- nächster Fahrzeugmieter;
- Eigenschaft des letzten oder nächsten Fahrzeugmieters als bevorzugter oder weniger bevorzugter Kunde. Ein "bevorzugter" Kunde kann beispielsweise als ein solcher angesehen werden, der Fahrzeuge in eher sauberem Zustand zurückgibt oder dem bevorzugt ein sauberes Fahrzeug übergeben wird. Ein "weniger bevorzugter" Kunde ist beispielsweise ein Fahrzeugnutzer, der Fahrzeuge bekanntermaßen eher schmutzig zurückgibt.

Günstig ist es, wenn der Reinigungsbedarf durch eine Bedienperson ermittelbar und der Steuereinrichtung mittels eines Datenverarbeitungsgerätes übermittelbar, oder wenn der Umfang der Fahrzeugreinigung im Fahrzeugpflegeauftrag veränderbar ist. Insbesondere ermöglicht dies, den Reinigungsbedarf nach einer der vorstehend genannten Methoden automatisch zu ermitteln und vorsorglich zusätzlich eine Kontrolle durch eine Bedienperson vorzunehmen.

Der Fahrzeugpflegeauftrag kann die Information umfassen, dass eine Reinigung nicht erforderlich ist, wenn kein hinreichender Bedarf hieran feststellbar ist, oder wenn in diesem Fall die Erstellung eines Fahrzeugpflegeauftrages entfällt.

Die Steuereinrichtung ist vorteilhafterweise zur Kommunikation mit autonomen Fahrzeugen ausgestaltet, wobei diese unter Ansteuerung durch die Steuereinrichtung bewegbar sind. Als "autonome" Fahrzeuge werden Fahrzeuge verstanden, die selbstfahrend und selbstlenkend ausgestaltet sind. Die Fahrzeuge können Informationen über eine das System umfassende Anlage aufweisen, so dass sie autonom von einer Startposition zu einer Zielposition fahren können. Autonom fahrende Fahrzeuge können vorzugsweise selbsttätig in die mindestens eine Fahrzeugpflegeeinrichtung einfahren und/oder von dieser abfahren. Die Steuereinrichtung kann autonome Fahrzeuge selbsttätig erkennen, oder diese können sich als solche der Steuereinrichtung zu erkennen geben.

Von Vorteil ist es, wenn die Steuereinrichtung zur Kommunikation mit fernsteuerbaren Fahrzeugen ausgestaltet ist, wobei diese unter Ansteuerung durch die Steuereinrichtung bewegbar sind. Unter "fernsteuerbaren" Fahrzeugen werden vorliegend insbesondere derartige Fahrzeuge verstanden, die Steuerbefehle der Steuereinrichtung zur Ansteuerung von Aktoren wie zum Beispiel von Antrieb, Lenkung und Bremse umsetzen können. Fernsteuerbare Fahrzeuge können von der Steuereinrichtung selbsttätig erkannt werden oder sich dieser zu erkennen geben.

Die Steuereinrichtung kann vorzugsweise an autonome und/oder fernsteuerbare Fahrzeuge Informationen übermitteln.

Günstigerweise weist das System Datenverarbeitungsgeräte für Bedienpersonen auf, über die nicht-benutzergeführte Fahrzeuge von den Bedienpersonen führbar sind. Denkbar ist, dass an sich autonome oder fernsteuerbare Fahrzeuge dennoch von einer Bedienperson führbar sind. Die Bedienperson kann mittels eines Datenverarbeitungsgerätes, beispielsweise eines Smartphones oder Tablet-Computers, Steuerbefehle zum Führen des Fahrzeuges übermitteln.

Von Vorteil ist es, wenn die Steuereinrichtung zur Kommunikation mit externen, von Bedienpersonen geführten oder in den Fahrzeugen angeordneten Datenverarbeitungsgeräten ausgestaltet ist zur Übermittlung von Anweisungen zur Ausführung der Fahrzeugpflegeaufträge unter Einsatz einer Bedienperson, insbesondere zur Führung von benutzergeführten Fahrzeugen. Bedienpersonen können beispielsweis tragbare Datenverarbeitungsgeräte bei sich haben, zum Beispiel ein Smartphone oder einen Tablet-Computer. Über das Datenverarbeitungsgerät kann die Steuereinrichtung der Bedienperson Informationen zur Abarbeitung eines Fahrzeugpflegeauftrages zukommen lassen. Beispielsweise beziehen sich die Informationen auf das Führen eines benutzergeführten Fahrzeuges zum Beispiel den Zeitpunkt und den Ort der Fahrzeugpflege. Alternativ oder ergänzend können Datenverarbeitungsgeräte in benutzergeführten Fahrzeugen angeordnet und darin beispielsweise fest installiert sein.

Das System kann bei einer vorteilhaften Ausführungsform mindestens eine Transporteinrichtung aufweisen, mit dem ein Fahrzeug zur mindestens einen Fahrzeugpflegeeinrichtung verbringbar und/oder von dieser abholbar ist, wobei die mindestens eine Transporteinrichtung mit der Steuereinrichtung in Kommunikation steht und von dieser ansteuerbar ist. Beispielsweise wird ein Fahrzeug von einem Stellplatz mittels der mindestens einen Transporteinrichtung abgeholt und zur Fahrzeugpflegeeinrichtung verbracht. Es ist denkbar, dass das Fahrzeug während der Fahrzeugpflege auf der Transporteinrichtung verbleibt oder zum Zweck der Fahrzeugpflege von dieser abgeladen wird. Das Fahrzeug kann im Anschluss an eine Fahrzeugpflege von der mindestens einen Transporteinrichtung abgeholt und von der Fahrzeugpflegeeinrichtung entfernt werden und beispielsweise in einem Stellplatz abgestellt werden.

Günstig ist es, wenn das System eine mit der Steuereinrichtung gekoppelte Detektionseinrichtung zum Feststellen einer Fahrzeugposition umfasst. Insbesondere besteht die Möglichkeit festzustellen, wo sich ein jeweiliges Fahrzeug gerade befindet. Positionsinformationen können von der Steuereinrichtung bei der Planung der Fahrzeugpflegeaufträge berücksichtigt werden.

Die Detektionseinrichtung weist vorzugsweise Sensorelemente zur bevorzugt berührungslosen Erfassung der Fahrzeuge auf. Beispielsweise können die Fahrzeuge optisch erfasst werden.

Die Sensorelemente sind oder umfassen vorteilhafterweise Kameras, über die die Fahrzeuge, deren Kennzeichen und/oder andersartige von den Fahrzeugen umfasste Kennzeichnungselemente optisch erfassbar sind. Andersartige Kennzeichnungselemente sind zum Beispiel codierte Aufkleber, Plaketten oder dergleichen, die an den Fahrzeugen angeordnet sind und eine insbesondere individuelle Erkennung der Fahrzeuge ermöglichen. Als Codes können beispielsweise Barcodes oder Matrix-Codes eingesetzt werden.

Alternativ oder ergänzend können die Sensorelemente Funkelemente zur Ortung von Fahrzeugen per Funkverbindung sein oder umfassen, beispielsweise mittels einer RFID-Technologie oder Bluetooth-Technologie.

Von Vorteil ist es, wenn die Detektionseinrichtung und/oder die Steuereinrichtung mit in den Fahrzeugen angeordneten Positionsbestimmungselementen in Kommunikation steht. Beispielsweise weisen Fahrzeuge Positionsbestimmungselemente auf, anhand derer eine Selbstortung der Fahrzeuge möglich ist. Hierbei ist die Nutzung eines absoluten Bezugssystems (beispielsweise mit GPS-Informationen) und/oder eines relativen Bezugssystems (beispielsweise Position innerhalb einer das System umfassenden Anlage) möglich. Die Fahrzeuge können der Steuereinrichtung Positionsinformationen zukommen lassen.

Die Steuereinrichtung braucht vorliegend nicht räumlich beschränkt zu sein und ist daher nicht notwendigerweise mit einer (einzigen) Datenverarbeitungseinrichtung gleichzusetzen, obgleich dies möglich ist.

Es kann vorliegend eine zentrale Steuereinrichtung oder eine räumliche verteilte, eine Mehrzahl von Datenverarbeitungseinheiten aufweisende Steuereinrichtung vorgesehen sein. Die Steuereinrichtung kann eine Mehrzahl von Datenverarbeitungseinheiten nutzen oder daraus gebildet sein, die sich an verschiedenen Orten befinden können. Die Datenverarbeitungseinheiten können kabelgebunden und/oder kabellos miteinander vernetzt sein. Möglich ist die teilweise oder vollständige Auslagerung der Steuereinrichtung in einer sogenannten "Cloud". Datenverarbeitungseinheiten der Steuereinrichtung können in Fahrzeugpflegeeinrichtungen angeordnet oder von diesen umfasst sein, beispielsweise die vorstehend genannten Steuereinheiten. Datenverarbeitungseinheiten der Steuereinrichtung können in Fahrzeugen angeordnet oder von diesen umfasst sein. In diesen Fahrzeugen können Informationen betreffend dem jeweiligen Fahrzeug zugeordnete Fahrzeugpflegeaufträge gespeichert sein.

Die Steuereinrichtung kann durch mindestens eine Datenverarbeitungseinheit gebildet sein oder eine solche umfassen. Eine jeweilige Datenverarbeitungseinheit umfasst zum Beispiel einen Mikroprozessor, von dem ein Computerprogramm der Datenverarbeitungseinheit ausgeführt werden kann. Das Computerprogramm umfasst insbesondere Algorithmen für die Erstellung, Verwaltung und Koordinierung von Fahrzeugpflegeaufträgen.

Die Steuereinrichtung, oder ein Teil davon, kann mindestens eine Speichereinheit umfassen, in der Informationen über die Fahrzeuge gespeichert sind. Fahrzeugpflegeaufträge können in der mindestens einen Speichereinheit gespeichert sein. Es kann eine gemeinsame Speichereinheit für eine Mehrzahl von Datenverarbeitungseinheiten vorgesehen sein. Die Speichereinheit kann getrennt von den Datenverarbeitungseinheiten angeordnet sein.

Die vorstehend genannte Fahrzeugsteuereinheit und/oder die vorstehend genannte Planungseinheit können von derselben Datenverarbeitungseinheit umfasst oder gebildet sein. Möglich ist auch eine räumliche Trennung der Fahrzeugsteuereinheit und der Planungseinheit. Die Fahrzeugsteuereinheit und die Planungseinheit können durch unterschiedliche Computerprogramme der Steuereinrichtung umgesetzt werden.

Die Steuereinrichtung umfasst mindestens ein Kommunikationsglied zum Kommunizieren mit Fahrzeugen und/oder der mindestens einen Fahrzeugpflegeeinrichtung.

Günstigerweise ist von der Steuereinrichtung ein Bericht über vorgesehene und/oder abgearbeitete Fahrzeugpflegeaufträge erstellbar ist. Der Bericht kann in physischer Form erstellt werden, beispielsweise durch Ausdrucken, und/oder digital. Der Bericht kann an weitere Datenverarbeitungseinheiten wie beispielsweise Datenverarbeitungsgeräte (Internetserver, Tablet-Computer, Laptop-Computer, Smartphone...) übermittelt werden. Informationen über Störungen im Betriebsablauf können im Bericht enthalten sein, beispielsweise betreffend eine Störung der mindestens einen Fahrzeugpflegeeinrichtung. Der Bericht kann eine Abrechnungsinformation enthalten oder als solche ausgebildet sein, die für eine Abrechnungseinrichtung des Systems vorgesehen ist. Die Rechnungsstellung kann dadurch erleichtert werden.

Das System umfasst vorzugsweise mindestens eine Übergabeeinrichtung zum Entgegennehmen des Fahrzeugs durch das System von einem Fahrzeugnutzer und/oder zur Übergabe des Fahrzeugs vom System an einen Fahrzeugnutzer.

Die jeweilige Übergabe kann unter Mithilfe einer Bedienperson oder ohne Bedienperson durchführbar sein.

Das System umfasst vorzugsweise ein Areal, auf dem zumindest die mindestens eine Fahrzeugpflegeeinrichtung und Stellplätze für Fahrzeuge angeordnet sind zum zeitweiligen Abstellen der Fahrzeuge. Es kann vorgesehen sein, dass Fahrzeuge vor und/oder nach der Abarbeitung eines Fahrzeugpflegeauftrages, gegebenenfalls zwischen der Abarbeitung aufeinanderfolgender Fahrzeugpflegeaufträge an einem Stellplatz abgestellt sind.

Wie eingangs erwähnt betrifft die vorliegende Erfindung auch eine Verwendung. Eine erfindungsgemäße Verwendung besteht in der Verwendung eines Systems der vorstehend genannten Art bei einer Mietfahrzeugstation, einem Autohaus, einem Autohof, einer Fahrzeugreinigungsstation, einer Parkstation, einer Car-Sharing-Station, einer Firmenfahrzeugstation oder -flotte oder einer Tankstelle.

Ein erfindungsgemäßes, die eingangs genannte Aufgabe lösendes Verfahren setzt ein System der vorstehend genannten Art ein und umfasst die Merkmale von Anspruch 18.

Die Vorteile, die bereits im Zusammenhang mit der Erläuterung des erfindungsgemäßen Systems erwähnt wurden, können bei der erfindungsgemäßen Verwendung und bei dem erfindungsgemäßen Verfahren ebenfalls erzielt werden. Diesbezüglich kann auf die voranstehenden Ausführungen verwiesen werden. Entsprechendes gilt für vorteilhafte Ausführungsbeispiele der erfindungsgemäßen Verwendung und des erfindungsgemäßen Verfahrens, zu deren Definition vorteilhafte Ausführungsformen des erfindungsgemäßen Systems herangezogen werden können.

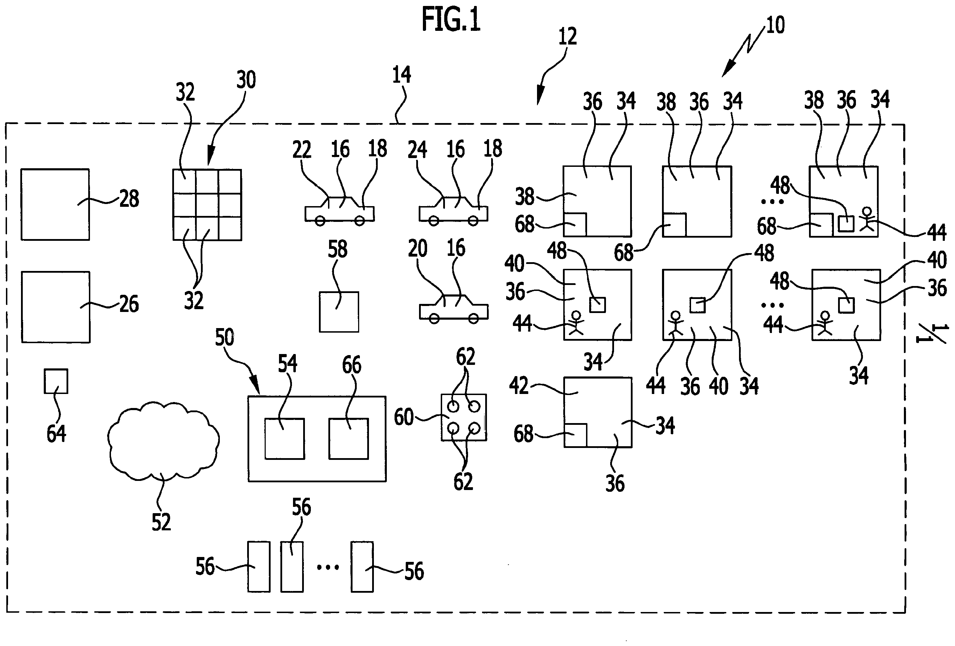

Die nachfolgende Beschreibung einer vorteilhaften Ausführungsform der Erfindung dient im Zusammenhang mit der einzigen Figur der Zeichnung der näheren Erläuterung der Erfindung. Es wird eine vorteilhafte Ausführungsform eines erfindungsgemäßen Systems beschrieben, mit dem das erfindungsgemäße Verfahren durchführbar ist. Weiter wird die erfindungsgemäße Verwendung des Systems beschrieben.

Die einzige Figur der Zeichnung zeigt schematisch eine mit dem Bezugszeichen 10 belegte vorteilhafte Ausführungsform eines erfindungsgemäßen Systems. Das System 10 wird bei einer erfindungsgemäßen Verwendung an einer Mietfahrzeugstation 12 eingesetzt. Die Mietfahrzeugstation 12 ist eine das System 10 umfassende Anlage, die ein Areal 14 aufweist.

Bei der Mietfahrzeugstation 12 werden Fahrzeuge 16 entgegengenommen und ausgegeben. Die Fahrzeuge 16 sind in der Regel unterschiedlich ausgestaltet, es existieren unterschiedliche Fahrzeugtypen, die sich insbesondere hinsichtlich der Fahrzeugklasse oder -größe voneinander unterscheiden können (Kleinfahrzeug, Kompaktfahrzeug, Mittelklassefahrzeug, Oberklassefahrzeug...) und/oder hinsichtlich des Fahrzeugaufbaus (Limousine, Combi, Roadster, Cabrio, Kleinbus...). Außerdem können sich die Fahrzeuge 16 hinsichtlich ihrer Funktionalität voneinander unterscheiden. Vorliegend kann beispielsweise zwischen nicht-benutzergeführten Fahrzeugen 18 und benutzergeführten Fahrzeugen 20 unterschieden werden.

Bei den nicht-benutzergeführten Fahrzeugen 18 kann vorliegend beispielsweise zwischen autonomen Fahrzeugen 22 unterschieden werden, die selbstfahrend und selbstlenkend ausgestaltet sind, und fernsteuerbaren Fahrzeugen 24. Fernsteuerbare Fahrzeuge 24 können Steuerbefehle entgegennehmen und in eine Ansteuerung eines Antriebs und einer Lenkung umsetzen. Vorliegend sind beispielhaft ein benutzergeführtes Fahrzeug 20, ein autonomes Fahrzeug 22 und ein fernsteuerbares Fahrzeug 24 dargestellt. Es versteht sich, dass sich auf dem Areal 14 in der Regel eine Vielzahl von Fahrzeugen 16 befindet.

Das System 10 umfasst eine erste Übergabeeinrichtung 26, an der zuvor vermietete Fahrzeuge von Fahrzeugmietern zurückgegeben und vom System 10 entgegengenommen werden können. Darüber hinaus weist das System 10 eine zweite Übergabeeinrichtung 28 auf, an der vermietete Fahrzeuge neuen Fahrzeugmietern übergeben werden können.

Innerhalb des Areals 14 können unterschiedliche Fahrwege für Fahrzeuge 16 vorgesehen sein (nicht gezeigt), damit diese auf eine in der nachfolgend noch erläuterten Weisen im Bereich des Areals 14 bewegt werden können.

Zum zwischenzeitlichen Abstellen von Fahrzeugen 16 weist das System 10 eine Parkeinrichtung 30 auf mit einer Mehrzahl von Stellplätzen 32 für Fahrzeuge 16. Die Stellplätze 32 können, wie in der Zeichnung schematisch dargestellt, nebeneinanderliegend angeordnet sein. Denkbar ist auch eine räumlich getrennte Anordnung und insbesondere Verteilung über den Bereich des Areals 14.

Das System 10 weist Fahrzeugpflegeeinrichtungen 34 auf. An einer jeweiligen Fahrzeugpflegeeinrichtung 34 kann eine in einem Fahrzeugpflegeauftrag hinterlegte Fahrzeugpflege für ein jeweiliges Fahrzeug 16 durchgeführt werden. Jedem Fahrzeug 16 kann eine Mehrzahl von Fahrzeugpflegeaufträgen zugeordnet sein zur Fahrzeugpflege an einer Mehrzahl von Fahrzeugpflegeeinrichtungen 34.

Vorliegend umfassen die Fahrzeugpflegeeinrichtungen 34 Einrichtungen zur Fahrzeugreinigung 36, und hierunter Fahrzeugwaschanlagen 38 und Innenraumreinigungseinrichtungen 40. Als weitere Fahrzeugpflegeeinrichtung 34 ist vorliegend eine Betankungseinrichtung 42 vorgesehen. Denkbar ist auch eine Ladeeinrichtung oder eine Tauscheinrichtung zum Laden bzw. Tauschen einer Batterie eines Fahrzeugs 16.

Die Fahrzeugwaschanlagen 38 können als Portalwaschanlage oder als Waschstraße ausgestaltet sein. Denkbar ist, dass die Fahrzeugwaschanlagen 38 eine autonome Pflege und insbesondere Reinigung von Fahrzeugen 16 vornehmen können, bei der der Reinigungsbetrieb nach dem Verbringen eines Fahrzeugs 16 zur Fahrzeugwaschanlage 38 automatisch in Gang gesetzt wird und automatisch beendet wird. Denkbar ist auch, dass der Reinigungsbetrieb unter zusätzlicher Mithilfe einer Bedienperson 44 ausgeführt wird. Beispielsweise startet die Bedienperson 44 das Reinigungsprogramm nach der Positionierung des Fahrzeugs 16 an der Fahrzeugwaschanlage 38.

Eine Bedienperson 44 kann das Fahrzeug 16 von außen und/oder innen zumindest teilweise reinigen, insbesondere waschen. Denkbar ist eine Vorreinigung bei einer Fahrzeugwaschanlage 38, zum Beispiel mit einem Reinigungswerkzeug 48. Dabei handelt es sich beispielsweise um eine Waschlanze eines Hochdruckreinigungsgerätes.

Die Innenraumreinigungseinrichtungen 40 dienen vorliegend zum Reinigen eines Fahrzeuginnenraums. Hierzu sind an den Innenraumreinigungseinrichtungen 40 Bedienpersonen 44 positioniert. Bedienpersonen 44 können ein jeweiliges Reinigungswerkzeug 48 zur Reinigung des Innenraums eines Fahrzeugs 16 heranziehen. Das Reinigungswerkzeug 48 ist beispielsweise eine Saugreinigungswerkzeug .

Alternativ kann eine autonome Innenraumreinigungseinrichtung 40 vorgesehen sein.

Die Betankungseinrichtung 42 ermöglicht das Betanken von Fahrzeugen 16. Vorliegend ist die Betankungseinrichtung 42 beispielsweise autonom ausgestaltet, zum autonomen Betanken der Fahrzeuge 16.

Alternativ kann eine Betankung durch eine Bedienperson 44 durchführbar sein.

Das System 10 umfasst eine Steuereinrichtung 50. Die Steuereinrichtung 50 dient zur Verwaltung und Koordination von Fahrzeugpflegeaufträgen, die den Fahrzeugen 16 zugeordnet sind. Die Steuereinrichtung 50 kann im Areal 14 oder räumlich von diesem getrennt angeordnet sein, sie kann mehrere Datenverarbeitungseinheiten umfassen, die räumlich am selben Ort oder an unterschiedlichen Orten positioniert sind. Möglich ist insbesondere auch, dass mindestens eine Datenverarbeitungseinheit der Steuereinrichtung 50 in einer in der Zeichnung symbolisiert dargestellten "Cloud" 52 angeordnet oder von dieser umfasst sind.

Vorliegend umfasst die Steuereinrichtung 50 eine Fahrzeugsteuereinheit 54. Die Fahrzeugsteuereinheit 54 ist zur Kommunikation mit nicht-benutzergeführten Fahrzeugen 18 ausgestaltet. Nicht-benutzergeführte Fahrzeuge 18 können von der Fahrzeugsteuereinheit 54 angesteuert werden und dadurch innerhalb des Areals 14 bewegt werden. Dies gilt für die autonomen Fahrzeuge 22 und die fernsteuerbaren Fahrzeuge 24.

Darüber hinaus kann die Fahrzeugsteuereinheit 54 mit Datenverarbeitungsgeräten 56 in Kommunikation stehen, von denen beispielhaft drei Datenverarbeitungsgeräte 56 in der Zeichnung dargestellt sind. Die Datenverarbeitungsgeräte 56 sind vorzugsweise portabel und beispielsweise als Smartphone oder Tablet-Computer ausgestaltet.

Benutzergeführte Fahrzeuge 20 können durch eine Bedienperson 44 geführt werden. Zu diesem Zweck kann die Fahrzeugsteuereinheit 54 Informationen betreffend die Abarbeitung eines Fahrzeugpflegeauftrags an ein Datenverarbeitungsgerät 56 einer Bedienperson 44 übermitteln. Die Bedienperson 44 kann das benutzergeführte Fahrzeug 20 gemäß den Vorgaben der Fahrzeugsteuereinheit 54 innerhalb des Areals 14 bewegen. Im jeweiligen Fahrzeug 16 kann ein Datenverarbeitungsgerät 56 angeordnet oder installiert sein.

Denkbar ist auch, dass eine Bedienperson 44 ein an sich nicht-benutzergeführtes Fahrzeug 18 führt.

Das System 10 umfasst bei einer bevorzugten Ausführungsform mindestens eine Transporteinrichtung 58, mit dem ein Fahrzeug 16 innerhalb des Areals 14 transportierbar ist, insbesondere zu einer Fahrzeugpflegeeinrichtung 34 verbringbar und/oder von dieser abholbar. Die Steuereinrichtung 50, insbesondere deren Fahrzeugsteuereinheit 54, ist zur Kommunikation mit der Transporteinrichtung 58 ausgestaltet. Unter Ansteuerung durch die Steuereinrichtung 50 kann die Transporteinrichtung 58 ein bestimmbares Fahrzeug 16 aufnehmen und innerhalb des Areals 14 wie vorgegeben bewegen.

Das System 10 umfasst eine Detektionseinrichtung 60 zur Positionsbestimmung von Fahrzeugen 16 innerhalb des Areals 14. Die Detektionseinrichtung 60 kann eine Vielzahl von beispielhaft dargestellten Sensorelementen 62 umfassen. Die Sensorelemente 62 sind bevorzugt räumlich über das Areal 14 verteilt angeordnet (nicht gezeigt).

Die Sensorelemente 62 ermöglichen es, die Position von Fahrzeugen 16 vorzugsweise berührungslos zu erfassen und der Steuereinrichtung 50 ein diesbezügliches Positionssignal zukommen zu lassen. Beispielsweise sind die Sensorelemente 62 als Kameras ausgestaltet. Die Sensorelemente 62 können das Fahrzeug als Ganzes, dessen Kennzeichen und/oder ein andersartiges Kennzeichnungselement erfassen, beispielsweise einen mit einem Code versehenen Aufkleber am Fahrzeug 16.

Alternativ oder ergänzend können die Sensorelemente 62 Funkelemente zur Funkortung von Fahrzeugen 16 sein, beispielsweise mittels RFID-Technologie oder Bluetooth-Technologie.

Mittels der Detektionseinrichtung 60 ist es der Steuereinrichtung 50 möglich, eine jeweilige Position eines Fahrzeuges 16 innerhalb des Areals 14 festzustellen. Dadurch ist für die Steuereinrichtung 50 auch ermittelbar, von welcher Startposition ein jeweiliges Fahrzeug 16 zu einer etwaigen Zielposition transportiert werden kann. Die Zeitdauer hierfür kann von der Steuereinrichtung 50 abgeschätzt werden.

Dieselben Ziele können vorzugsweise dadurch erreicht werden, dass Fahrzeuge 16 ein integriertes Positionsbestimmungselement umfassen, das mit der Steuereinrichtung 50 in Kommunikation steht. Fahrzeuge 16 können der Steuereinrichtung 50 ihre jeweilige Position melden, so dass diese dadurch ebenfalls den Standort innerhalb des Areals 14 feststellen kann.

Die Steuereinrichtung 50 erlaubt die eigenständige oder von einer Bedienperson 44 ausgelöste Erstellung und Koordinierung von Fahrzeugpflegeaufträgen, die einem jeweiligen Fahrzeug zugeordnet sind. Die Fahrzeugpflegeaufträge sind insbesondere Fahrzeugreinigungsaufträge zur Außenreinigung und Innenreinigung mittels der Fahrzeugwaschanlagen 38 bzw. an den Innenraumreinigungseinrichtungen 40. Vorgesehen sein können auch Fahrzeugbetankungsaufträge an der Betankungseinrichtung 42 oder Ladeaufträge bzw. Tauschaufträge zum Laden oder Tauschen einer Fahrzeugbatterie.

Zum Erstellen von Fahrzeugreinigungsaufträgen ist an der Übergabeeinrichtung 26 beispielsweise eine Erfassungseinrichtung 64 vorgesehen, die mit der Steuereinrichtung 50 in Kommunikation steht. In der Zeichnung nicht dargestellte Kameras erstellen Abbildungen vom Fahrzeug 16. Anhand der Abbildungen kann die Steuereinrichtung 50 den Reinigungsbedarf für ein bestimmtes Fahrzeug 16 abschätzen und einen Fahrzeugreinigungsauftrag erstellen. Der Reinigungsbedarf kann den Umfang der Fahrzeugreinigung als Bestandteil des Fahrzeugreinigungsauftrages definieren.

Der Reinigungsbedarf kann ferner beispielsweise aufgrund mindestens einer der weiteren Informationen von der Steuereinrichtung 50 selbsttätig ermittelbar sein: Fahrzeugtyp, Fahrzeugalter, Zeitpunkt seit der letzten Reinigung, Fahrtleistung seit der letzten Reinigung und/oder, insbesondere bei Mietfahrzeugen, Wetter am Ort der Nutzung, Anmietung oder Abgabe des Fahrzeugs, Straßenzustand am Ort der Nutzung, Anmietung oder Abgabe des Fahrzeugs, vorangegangene Mietdauer, vorgesehene folgende Mietdauer, letzter oder nächster Fahrzeugmieter, Eigenschaft des letzten oder nächsten Fahrzeugmieters als bevorzugter oder weniger bevorzugter Kunde.

Eine Bedienperson 44 kann alternativ oder ergänzend den Reinigungsbedarf insbesondere anhand der tatsächlichen Verschmutzung feststellen und der Steuereinrichtung 50 im Hinblick auf den Umfang des Fahrzeugreinigungsauftrages zum Beispiel über ein Datenverarbeitungsgerät 56 vorgeben.

Fahrzeugpflegeaufträge können beispielsweise von einer Planungseinheit 66 der Steuereinrichtung 50 erstellt, verwaltet und koordiniert werden.

Die Steuereinrichtung 50 koordiniert die Abarbeitung der Reinigungsaufträge und etwaiger Betankungsaufträge vorzugsweise im Hinblick auf zumindest eines der Folgenden:
- ein hoher Durchsatz von Fahrzeugen 16 an zumindest einer der Fahrzeugpflegeeinrichtungen 34;
- eine geringe Wartezeit für Fahrzeuge 16 an einer jeweiligen Fahrzeugpflegeeinrichtung 34 vor der Aufnahme der Reinigung oder der Betankung;
- eine möglichst stockungsarme Verbringung von Fahrzeugen 16 zu einer jeweiligen Fahrzeugpflegeeinrichtung 34; und
- eine möglichst stockungsarme Abfuhr von Fahrzeugen 16 von einer jeweiligen Fahrzeugpflegeeinrichtung 34.

Dabei besteht der besondere Vorteil, dass mittels der Steuereinrichtung 50 die Reihenfolge der Abarbeitung von Fahrzeugpflegeaufträgen sowie, alternativ oder ergänzend, der Umfang eines jeweiligen Fahrzeugpflegeauftrages veränderbar ist, um eine möglichst effiziente Abarbeitung der Fahrzeugpflegeaufträge zu ermöglichen. Das System 10 und das mit ihm durchführbare Verfahren weisen dadurch eine hohe Vielseitigkeit und Anpassbarkeit auf.

Beispielsweise kann dadurch Verzögerungen bei der Abarbeitung von Fahrzeugpflegeaufträgen begegnet werden. Verzögerungen können sich zum Beispiel infolge von einer Reinigungsdauer unter Einsatz einer Bedienperson 44 an einer Innenraumreinigungseinrichtung 40 ergeben, wobei die Reinigungsdauer mehr Zeit in Anspruch nimmt als geplant. Verzögerungen können sich beispielsweise auch durch Störungen einer Fahrzeugpflegeeinrichtung 34 ergeben. Verzögerungen können sich beispielsweise auch durch Nichtverfügbarkeit einer Bedienperson 44 ergeben, die zum Verbringen eines Fahrzeuges 16 zu einer Fahrzeugpflegeeinrichtung 34 oder zur Durchführung einer Innenraumreinigung an einer Innenraumreinigungseinrichtung 40 nicht zur Verfügung steht.

Alternativ oder ergänzend können Schwankungen bei der Anzahl von zu pflegenden Fahrzeugen 16 an einer Fahrzeugpflegeeinrichtung 34 und bei einer hohen Nachfrage nach Fahrzeugen 16 insbesondere zu Stoßzeiten begegnet werden. Eine hohe Anzahl von zu pflegenden Fahrzeugen 16, beispielsweise aufgrund von einer Vielzahl innerhalb kurzer Zeit zurückgegebener Fahrzeuge 16 oder aufgrund einer hohen Nachfrage nach Fahrzeugen 16 zu Stoßzeiten kann es ebenfalls erforderlich machen, die Reihenfolge der Abarbeitung der Fahrzeugpflegeaufträge und/oder die Umfänge einzelner oder aller Fahrzeugpflegeaufträge von der Steuereinrichtung 50 selbsttätig zu verändern.

Zur Optimierung des Ablaufs der Fahrzeugpflege beim System 10 kann die Steuereinrichtung 50 über die Bestimmung oder Abänderung der Reihenfolge der Abarbeitung der Fahrzeugpflegeaufträge und/oder der Umfänge der Fahrzeugpflegeaufträge hinaus zumindest eines der Folgenden bestimmen oder abändern, abhängig von Informationen, die von der Steuereinrichtung 50 selbsttätig ermittelbar oder dieser zuführbar sind:
- Zeitpunkte der Abarbeitung von Fahrzeugpflegeaufträgen;
- Zuweisung eines jeweiligen Fahrzeugpflegeauftrages zu einer bestimmten Fahrzeugpflegeeinrichtung 34 im Hinblick auf eine optimierte Auslastung und unter Berücksichtigung etwaiger Service- oder Wartungszeiten oder Störungen einer Fahrzeugpflegeeinrichtung 34.

Beispielsweise besteht die Möglichkeit, abweichend vom ermittelten Reinigungsbedarf einen Reinigungsauftrag zu verändern und damit den Umfang des Fahrzeugpflegeauftrages anzupassen. Beispielsweise wird bei einer Vielzahl innerhalb kurzer Zeit zurückgegebener oder innerhalb kurzer Zeit verliehener Fahrzeuge 16 mit den Fahrzeugwaschanlagen 38 oder an den Innenraumreinigungseinrichtungen 40 lediglich eine Grundreinigung durchgeführt, abweichend vom zuvor ermittelten Reinigungsbedarf. Umgekehrt kann bei ausreichender Zeit und geringer Nachfrage abweichend vom Reinigungsauftrag mit den Fahrzeugwaschanlagen 38 oder an den Innenraumreinigungseinrichtungen 40 mit dem Ziel einer maximalen Reinigungsleistung gereinigt werden.

Die vorstehend genannten Informationen, abhängig von denen von der Steuereinrichtung 50 die Reihenfolge der Abarbeitung, der Umfang, der Zeitpunkt und/oder die Zuweisung von Fahrzeugpflegeaufträgen zu einer Fahrzeugpflegeeinrichtung 34 bestimmt oder verändert werden kann, sind oder umfassen vorzugsweise zumindest eines der Folgenden:
- Angabe über die Beschaffenheit eines Fahrzeuges 16 als benutzergeführtes Fahrzeug 20 oder nicht-benutzergeführtes Fahrzeug 18;
- erwartete und/oder tatsächliche Ankunftszeit eines Fahrzeuges 16 an der Mietfahrzeugstation 12;
- erwartete und/oder tatsächliche Ankunftszeit eines Fahrzeuges 16 an einer Fahrzeugpflegeeinrichtung 34;
- erwartete und/oder tatsächliche Anzahl zu pflegender Fahrzeuge 16;
- erwartete und/oder tatsächliche Dauer der Abarbeitung eines Fahrzeugpflegeauftrages an einer Fahrzeugpflegeeinrichtung 34;
- Auslastung der Fahrzeugpflegeeinrichtungen 34;
- Wochentag einer geplanten oder durchgeführten Fahrzeugpflege, wobei zu Stoßzeiten der Umfang der Fahrzeugpflegeaufträge bevorzugt verringerbar ist;
- Tageszeit einer geplanten oder durchgeführten Fahrzeugpflege, wobei zu Stoßzeiten der Umfang der Fahrzeugpflegeaufträge bevorzugt verringerbar ist;
- Urlaubszeiten oder Nichturlaubszeiten;
- Auflagen betreffend Arbeitszeiten von Bedienpersonen 44, wobei vorzugsweise die Pflege benutzergeführter Fahrzeuge 20 tagsüber durchführbar ist und die Pflege nicht-benutzergeführter Fahrzeuge 18 auch nachts durchführbar ist und/oder wobei vorzugsweise eine Fahrzeugpflegeeinrichtung 34 unter Einsatz einer Bedienperson 44 (beispielweise eine Innenraumreinigungseinrichtung 40) tagsüber eingesetzt wird und eine autonome Fahrzeugpflegeeinrichtung 34 auch nachts einsetzbar ist;
- Auflagen betreffend Betriebszeiten der Fahrzeugpflegeeinrichtung 34, beispielsweise hinsichtlich Schallschutz;
- Kosten für Energie und Verbrauchsmittel, insbesondere Wasser, die für den Betrieb der Fahrzeugpflegeeinrichtung 34 erforderlich sind, wobei die Fahrzeugpflege vorzugsweise zu Zeiten geringer Kosten durchgeführt wird;
- Informationen über Meldungen bei der Abarbeitung von Fahrzeugpflegeaufträgen, die der Steuereinrichtung 50 von einer Fahrzeugpflegeeinrichtung 34 oder von einer Bedienperson 44 der Fahrzeugpflegeeinrichtung 34 übermittelt werden;
- Informationen über etwaige Service- oder Wartungszeiten oder Störungen einer Fahrzeugpflegeeinrichtung 34;
- Informationen über etwaige Störungen oder Einschränkungen des Betriebs von öffentlichen Verkehrsmitteln oder öffentlichen Verkehrs;
- Informationen über Streiks von Bedienpersonen 44.

Bei der Abarbeitung der Fahrzeugpflegeaufträge können Fahrzeuge 16 wie vorstehend erläutert nicht-benutzergeführt, benutzergeführt oder mittels der Transporteinrichtung 58 zu einer Fahrzeugpflegeeinrichtung 34 verbracht werden. Bei autonomer Fahrzeugpflegeeinrichtung 34 kann eine autonome Reinigung bzw. Betankung der Fahrzeuge 16 erfolgen. Zu diesem Zweck kann die Steuereinrichtung 50, beispielsweise über die Planungseinheit 66, einer jeweiligen Steuereinheit 68 einer Fahrzeugpflegeeinrichtung 34 eine Information betreffend einen Fahrzeugpflegeauftrag zukommen lassen.

Der Beginn der Fahrzeugpflege kann beispielsweise von der Planungseinheit 66 unter Ansteuerung der Steuereinheit 68 ausgelöst werden.

Eine jeweilige Steuereinheit 68 kann Bestandteil der Steuereinrichtung 50 sein, der beispielsweise räumlich getrennt von der Fahrzeugsteuereinheit 54 und der Planungseinheit 66 angeordnet ist.

Eine jeweilige Steuereinheit 68 kann den Status der Fahrzeugpflege an die Steuereinrichtung 50 und insbesondere deren Planungseinheit 66 übermitteln, um diese über den Fortschritt der Fahrzeugpflege zu informieren. Insbesondere wird die Beendigung der Fahrzeugpflege an die Steuereinrichtung 50 übermittelt.

Erfolgt eine Fahrzeugpflege unter Einsatz einer Bedienperson 44, kann vorgesehen sein, dass einer jeweiligen Steuereinheit 68 einer Fahrzeugpflegeeinrichtung 34 eine Information betreffend einen Fahrzeugpflegeauftrag von der Planungseinheit 66 übermittelt wird und die Bedienperson 44 die Fahrzeugpflege startet.

Alternativ kann der Bedienperson 44 beispielsweise auf einem Datenverarbeitungsgerät 56 eine Information betreffend den Fahrzeugpflegeauftrag übermittelt werden, dessen Abarbeitung von der Bedienperson 44 in Gang gesetzt werden kann.

Eine Statusinformation und die Beendigung der Fahrzeugpflege kann von der Bedienperson 44 über das Datenverarbeitungsgerät 56 an die Steuereinrichtung 50 und insbesondere deren Planungseinheit 66 übermittelt werden, oder wie vorstehend erläutert, über die Steuereinheit 68.

### Bezugszeichenliste:

- 10: System
- 12: Mietfahrzeugstation
- 14: Areal
- 16: Fahrzeug
- 18: nicht-benutzergeführtes Fahrzeug
- 20: benutzergeführtes Fahrzeug
- 22: autonomes Fahrzeug
- 24: fernsteuerbares Fahrzeug
- 26: Übergabeeinrichtung
- 28: Übergabeeinrichtung
- 30: Parkeinrichtung
- 32: Stellplatz
- 34: Fahrzeugpflegeeinrichtung
- 36: Einrichtung zur Fahrzeugreinigung
- 38: Fahrzeugwaschanlage
- 40: Innenraumreinigungseinrichtung
- 42: Betankungseinrichtung
- 44: Bedienperson
- 48: Reinigungswerkzeug
- 50: Steuereinrichtung
- 52: Cloud
- 54: Fahrzeugsteuereinheit
- 56: Datenverarbeitungsgerät
- 58: Transporteinrichtung
- 60: Detektionseinrichtung
- 62: Sensorelement
- 64: Erfassungseinrichtung
- 66: Planungseinheit
- 68: Steuereinheit

## Patentansprüche

1. System zur Fahrzeugpflege, umfassend:
- mindestens eine Fahrzeugpflegeeinrichtung (34), zu der Fahrzeuge (16) verbringbar und von der Fahrzeuge (16) entfernbar sind; und
- eine Steuereinrichtung (50), die mindestens ein Kommunikationsglied zur Kommunikation mit der mindestens einen Fahrzeugpflegeeinrichtung (34) umfasst;
wobei:
- in der Steuereinrichtung (50) einem jeweiligen Fahrzeug (16) zugeordnet zumindest ein Fahrzeugpflegeauftrag umfassend Informationen über die Pflege des Fahrzeugs (16) hinterlegbar ist;
- die Fahrzeuge (16) abhängig vom mindestens einen Fahrzeugpflegeauftrag an der mindestens einen Fahrzeugpflegeeinrichtung (34) behandelbar sind; und
- von der Steuereinrichtung (50) die Reihenfolge der Abarbeitung von Fahrzeugpflegeaufträgen und/oder der in zumindest einem Fahrzeugpflegeauftrag hinterlegte Umfang der Fahrzeugpflege veränderbar ist;
wobei die Steuereinrichtung (50) eine Fahrzeugsteuereinheit (54) und eine Planungseinheit (66) umfasst, wobei:
- die Fahrzeugsteuereinheit (54) zur Kommunikation mit nicht-benutzergeführten Fahrzeugen (18) über ein Kommunikationsglied ausgestaltet ist; und
- die Planungseinheit (66):
- zur Koordination von Fahrzeugpflegeaufträgen ausgebildet ist; und
- mit mindestens einer Steuereinheit (68), die der mindestens einen Fahrzeugpflegeeinrichtung (34) zugeordnet ist oder von dieser umfasst ist, in Kommunikation steht, zur Übermittlung von Fahrzeugpflegeaufträgen an die mindestens eine Steuereinheit (68) und/oder zum Empfang von Zustandsmeldungen über die mindestens eine Fahrzeugpflegeeinrichtung (34) durch die mindestens eine Steuereinheit (68).

2. System nach Anspruch 1, **dadurch gekennzeichnet, dass** zumindest eines der Folgenden gilt:
- eine Mehrzahl von Fahrzeugpflegeeinrichtungen (34) ist vorgesehen, wobei Fahrzeugen (16) mehr als ein Fahrzeugpflegeauftrag zur Pflege an einer jeweiligen Fahrzeugpflegeeinrichtung (34) zugeordnet sein kann;
- von der Steuereinrichtung (50) ist die Reihenfolge der Abarbeitung mehrerer einem Fahrzeug (16) zugeordneter Fahrzeugpflegeaufträge und/oder die Reihenfolge der Abarbeitung von unterschiedlichen Fahrzeugen (16) zugeordneten Fahrzeugpflegeaufträgen veränderbar;
- die Reihenfolge der Abarbeitung von Fahrzeugpflegeaufträgen ist von einer Bedienperson (44) des Systems (10) mittels eines Datenverarbeitungsgerätes (56) veränderbar;
- die Reihenfolge der Abarbeitung von Fahrzeugpflegeaufträgen ist von der Steuereinrichtung (50) und/oder durch eine Bedienperson (44) des Systems (10) festlegbar;
- ein in zumindest einem Fahrzeugpflegeauftrag hinterlegter Umfang der Fahrzeugpflege ist durch eine Bedienperson (44) des Systems (10) veränderbar.

3. System nach einem der voranstehenden Ansprüche, **dadurch gekennzeichnet, dass** als Fahrzeugpflegeeinrichtung (34) mindestens eine Einrichtung zur Fahrzeugreinigung (36) vorgesehen ist.

4. System nach Anspruch 3, **dadurch gekennzeichnet, dass** zumindest eines der Folgenden gilt:
- die Einrichtung zur Fahrzeugreinigung (36) ist oder umfasst eine Fahrzeugwaschanlage (38);
- die Einrichtung zur Fahrzeugreinigung (36) ist oder umfasst eine Innenraumreinigungseinrichtung (40) zum Reinigen eines Fahrzeuginnenraums;
- die Einrichtung zur Fahrzeugreinigung (36) weist mindestens ein von einer Bedienperson (44) geführtes Reinigungswerkzeug (48) auf oder ein solches ist an der Einrichtung zur Fahrzeugreinigung (36) angeordnet.

5. System nach einem der voranstehenden Ansprüche, **dadurch gekennzeichnet, dass** zumindest eines der Folgenden gilt:
- als Fahrzeugpflegeeinrichtung (34) ist eine Einrichtung zum Auffüllen, Wechseln und/oder Ablassen eines Betriebsstoffes oder Verbrauchsteils des Fahrzeuges vorgesehen, insbesondere eine Betankungseinrichtung (42) für das Fahrzeug, eine Ladeeinrichtung oder eine Tauscheinrichtung für eine Fahrzeugbatterie;
- mindestens eine Fahrzeugpflegeeinrichtung (34) ist zur autonomen Pflege des Fahrzeuges (16), zumindest teilweise, ausgestaltet;
- mindestens eine Fahrzeugpflegeeinrichtung (34) ist derart ausgestaltet, dass eine Fahrzeugpflege zumindest teilweise unter Einsatz einer Bedienperson (44) erfolgt;
- die Reihenfolge der Abarbeitung der Fahrzeugpflegeaufträge und/oder der Umfang von Fahrzeugpflegeaufträgen an zumindest einer Fahrzeugpflegeeinrichtung (34) wird von der Steuereinrichtung (50) im Hinblick auf einen hohen Durchsatz von Fahrzeugen (16) bestimmt oder verändert.

6. System nach einem der voranstehenden Ansprüche, **dadurch gekennzeichnet, dass** die Reihenfolge der Abarbeitung der Fahrzeugpflegeaufträge und/oder der Umfang von Fahrzeugpflegeaufträgen an zumindest einer Fahrzeugpflegeeinrichtung (34) von der Steuereinrichtung (50) im Hinblick auf zumindest eines der Folgenden bestimmt oder verändert wird:
- geringe Wartezeit für ein Fahrzeug (16) an der Fahrzeugpflegeeinrichtung (34) vor der Aufnahme der Fahrzeugpflege;
- möglichst stockungsarme Verbringung von Fahrzeugen (16) zur Fahrzeugpflegeeinrichtung (34);
- möglichst stockungsarme Entfernung von Fahrzeugen (16) von der Fahrzeugpflegeeinrichtung (34).

7. System nach einem der voranstehenden Ansprüche, **dadurch gekennzeichnet, dass** zumindest eines der Folgenden gilt:
- die Reihenfolge der Abarbeitung der Fahrzeugpflegeaufträge und/oder der in einem Fahrzeugpflegeauftrag hinterlegte Umfang der Fahrzeugpflege wird von der Steuereinrichtung (50) auf Basis des Fahrzeugpflegeauftrages im Hinblick auf das Ergebnis der Fahrzeugpflege bestimmt oder verändert;
- von der Steuereinrichtung (50) ist die Reihenfolge der Abarbeitung der Fahrzeugpflegeaufträge, der in einem Fahrzeugpflegeauftrag hinterlegte Umfang der Fahrzeugpflege, Zeitpunkte der Abarbeitung von Fahrzeugpflegeaufträgen und/oder die Zuweisung eines jeweiligen Fahrzeugpflegeauftrages zu einer bestimmten Fahrzeugpflegeeinrichtung abhängig von der Steuereinrichtung (50) zuführbaren oder von ihr selbsttätig ermittelbaren Informationen bestimmbar oder veränderbar.

8. System nach Anspruch 7, **dadurch gekennzeichnet, dass** die Informationen zumindest eines der Folgenden sind oder umfassen:
- Angaben über die Beschaffenheit des Fahrzeugs (16) als benutzergeführtes Fahrzeug (20) oder nicht-benutzergeführtes Fahrzeug (18);
- erwartete und/oder tatsächliche Ankunftszeit eines Fahrzeuges (16) an einer das System aufweisenden Anlage;
- erwartete und/oder tatsächliche Ankunftszeit eines Fahrzeuges (16) an der mindestens einen Fahrzeugpflegeeinrichtung (34);
- erwartete und/oder tatsächliche Anzahl zu pflegender Fahrzeuge (16);
- erwartete und/oder tatsächliche Dauer der Abarbeitung eines Fahrzeugpflegeauftrages an der mindestens einen Fahrzeugpflegeeinrichtung (34);
- Auslastung der mindestens einen Fahrzeugpflegeeinrichtung (34);
- Wochentag einer geplanten oder durchgeführten Fahrzeugpflege, wobei zu Stoßzeiten der Umfang der Fahrzeugpflegeaufträge bevorzugt verringerbar ist;
- Tageszeit einer geplanten oder durchgeführten Fahrzeugpflege, wobei zu Stoßzeiten der Umfang der Fahrzeugpflegeaufträge bevorzugt verringerbar ist;
- Urlaubszeiten oder Nichturlaubszeiten;
- Auflagen betreffend Arbeitszeiten von Bedienpersonen (44), wobei vorzugsweise die Pflege benutzergeführter Fahrzeuge (20) tagsüber durchführbar ist und die Pflege nicht-benutzergeführter Fahrzeuge (18) auch nachts durchführbar ist und/oder wobei vorzugsweise eine Fahrzeugpflegeeinrichtung (34) unter Einsatz einer Bedienperson (44) tagsüber eingesetzt wird und eine autonome Fahrzeugpflegeeinrichtung (34) auch nachts einsetzbar ist;
- Auflagen betreffend Betriebszeiten der mindestens einen Fahrzeugpflegeeinrichtung (34), beispielsweise hinsichtlich Schallschutz;
- Kosten für Energie und Verbrauchsmittel, insbesondere Wasser, die für den Betrieb der mindestens einen Fahrzeugpflegeeinrichtung (34) erforderlich sind, wobei die Fahrzeugpflege vorzugsweise zu Zeiten geringer Kosten durchgeführt wird;
- Informationen über etwaige Service- oder Wartungszeiten oder Störungen der mindestens einen Fahrzeugpflegeeinrichtung (34);
- Informationen über etwaige Störungen oder Einschränkungen des Betriebs von öffentlichen Verkehrsmitteln oder im öffentlichen Verkehr; und
- Informationen über Streik oder anderweitig bedingte Ausfälle von Bedienpersonen (44) von Fahrzeugen (16) oder der mindestens einen Fahrzeugpflegeeinrichtung (34).

9. System nach einem der voranstehenden Ansprüche, **dadurch gekennzeichnet, dass** zumindest eines der Folgenden gilt:
- als Fahrzeugpflegeeinrichtung (34) ist eine Einrichtung zur Fahrzeugreinigung (36) vorgesehen und die Reihenfolge der Abarbeitung der Fahrzeugpflegeaufträge und/oder der Umfang der Fahrzeugreinigung wird im Hinblick auf eine Basis- oder Grundreinigung der Fahrzeuge (16) oder im Hinblick auf eine maximale Reinigungsleistung bestimmt;
- als Fahrzeugpflegeeinrichtung (34) ist eine Einrichtung zur Fahrzeugreinigung (36) vorgesehen und ein Reinigungsbedarf für das Fahrzeug (16) ist bestimmbar im Hinblick auf die Hinterlegung eines Umfangs der Fahrzeugreinigung im Fahrzeugpflegeauftrag zur bedarfsabhängigen Reinigung des Fahrzeuges (16).

10. System nach Anspruch 9, **dadurch gekennzeichnet, dass** zumindest eines der Folgenden gilt:
- das System weist eine Erfassungseinrichtung (64) für Fahrzeuge (16) auf, die insbesondere mindestens eine Kamera umfasst, und der Reinigungsbedarf von der Steuereinrichtung (50) ist abhängig von einem Signal der Erfassungseinrichtung (64);
- der Reinigungsbedarf ist durch eine Bedienperson (44) ermittelbar und der Steuereinrichtung (50) mittels eines Datenverarbeitungsgerätes (56) übermittelbar;
- der Fahrzeugpflegeauftrag umfasst die Information, dass eine Reinigung nicht erforderlich ist, wenn kein hinreichender Bedarf hieran feststellbar ist, oder in diesem Fall entfällt die Erstellung eines Fahrzeugpflegeauftrages.

11. System nach Anspruch 9 oder 10, **dadurch gekennzeichnet, dass** der Reinigungsbedarf von der Steuereinrichtung (50) abhängig von zumindest einem der Folgenden ermittelbar ist:
- tatsächlicher Verschmutzungszustand;
- Fahrzeugtyp;
- Fahrzeugalter;
- Zeitpunkt seit der letzten Reinigung;
- Fahrtleistung seit der letzten Reinigung;
und/oder, insbesondere bei Mietfahrzeugen:
- Wetter am Ort der Nutzung, Anmietung oder Abgabe des Fahrzeugs (16);
- Straßenzustand am Ort der Nutzung, Anmietung oder Abgabe des Fahrzeugs (16);
- vorangegangene Mietdauer;
- vorgesehene folgende Mietdauer;
- letzter Fahrzeugmieter;
- nächster Fahrzeugmieter;
- Eigenschaft des letzten oder nächsten Fahrzeugmieters als bevorzugter oder weniger bevorzugter Kunde.

12. System nach einem der voranstehenden Ansprüche, **dadurch gekennzeichnet, dass** zumindest eines der Folgenden gilt:
- die Steuereinrichtung (50) ist zur Kommunikation mit autonomen Fahrzeugen (22) ausgestaltet, wobei diese unter Ansteuerung durch die Steuereinrichtung (50) bewegbar sind und/oder von der Steuereinrichtung (50) Informationen an die autonomen Fahrzeuge (22) übermittelbar sind;
- die Steuereinrichtung (50) ist zur Kommunikation mit fernsteuerbaren Fahrzeugen (24) ausgestaltet, wobei diese unter Ansteuerung durch die Steuereinrichtung (50) bewegbar sind und/oder von der Steuereinrichtung (50) Informationen an die fernsteuerbaren Fahrzeuge (24) übermittelbar sind;
- das System weist Datenverarbeitungsgeräte (56) für Bedienpersonen auf, über die nicht-benutzergeführte Fahrzeuge (18) von den Bedienpersonen (44) führbar sind;
- die Steuereinrichtung (50) ist zur Kommunikation mit externen, von Bedienpersonen (44) geführten oder in den Fahrzeugen (16) angeordneten Datenverarbeitungsgeräten (56) ausgestaltet zur Übermittlung von Anweisungen zur Ausführung der Fahrzeugpflegeaufträge unter Einsatz einer Bedienperson (44), insbesondere zur Führung von benutzergeführten Fahrzeugen (20);
- das System (10) weist mindestens eine Transporteinrichtung (58) auf, mit dem ein Fahrzeug (16) zur mindestens einen Fahrzeugpflegeeinrichtung (34) verbringbar und/oder von dieser abholbar ist, wobei die mindestens eine Transporteinrichtung (58) mit der Steuereinrichtung (50) in Kommunikation steht und von dieser ansteuerbar ist.

13. System nach einem der voranstehenden Ansprüche, **dadurch gekennzeichnet, dass** das System (10) eine mit der Steuereinrichtung (50) gekoppelte Detektionseinrichtung (60) zum Feststellen einer Fahrzeugposition umfasst.

14. System nach Anspruch 13, **dadurch gekennzeichnet, dass** zumindest eins der Folgenden gilt:
- die Detektionseinrichtung (60) weist Sensorelemente (62) zur bevorzugt berührungslosen Erfassung der Fahrzeuge (16) auf;
- die Detektionseinrichtung (60) und/oder die Steuereinrichtung (50) steht mit in den Fahrzeugen (16) angeordneten Positionsbestimmungselementen in Kommunikation.

15. System nach Anspruch 14, **dadurch gekennzeichnet, dass** die Sensorelemente (62):
- Kameras sind oder umfassen, über die die Fahrzeuge (16), deren Kennzeichen und/oder andersartige von den Fahrzeugen umfasste Kennzeichnungselemente optisch erfassbar sind; und/oder
- Funkelemente zur Ortung von Fahrzeugen (16) über eine Funkverbindung sind oder umfassen, beispielsweise mittels einer RFID-Technologie oder Bluetooth-Technologie.

16. System nach einem der voranstehenden Ansprüche, **dadurch gekennzeichnet, dass** zumindest eines der Folgenden gilt:
- das System (10) umfasst eine zentrale Steuereinrichtung (50) oder eine räumliche verteilte, eine Mehrzahl von Datenverarbeitungseinheiten aufweisende Steuereinrichtung (50);
- von der Steuereinrichtung (50) ist ein Bericht über vorgesehene und/oder abgearbeitete Fahrzeugpflegeaufträge erstellbar;
- das System (10) umfasst mindestens eine Übergabeeinrichtung (26, 28) zum Entgegennehmen des Fahrzeugs (16) durch das System (10) von einem Fahrzeugnutzer und/oder zur Übergabe des Fahrzeugs (16) vom System (10) an einen Fahrzeugnutzer;
- das System (10) umfasst ein Areal (14), auf dem zumindest die mindestens eine Fahrzeugpflegeeinrichtung (34) und Stellplätze (32) für Fahrzeuge (16) angeordnet sind zum zeitweiligen Abstellen der Fahrzeuge (16).

17. Verwendung eines Systems nach einem der voranstehenden Ansprüche bei einer Mietfahrzeugstation (12), einem Autohaus, einem Autohof, einer Fahrzeugreinigungsstation, einer Parkstation, einer Car-Sharing-Station, einer Firmenfahrzeugstation oder -flotte oder einer Tankstelle.

18. Verfahren zur Fahrzeugpflege mit einem System nach einem der Ansprüche 1 bis 16, bei dem:
- in der Steuereinrichtung einem jeweiligen Fahrzeug zugeordnet zumindest ein Fahrzeugpflegeauftrag umfassend Informationen über die Pflege des Fahrzeugs hinterlegbar ist;
- die Fahrzeuge abhängig vom mindestens einen Fahrzeugpflegeauftrag zur mindestens einen Fahrzeugpflegeeinrichtung verbracht werden, an dieser gemäß dem Fahrzeugpflegeauftrag gepflegt und von dieser entfernt werden;
- die Reihenfolge der Abarbeitung von Fahrzeugpflegeaufträgen und/oder der in zumindest einem Fahrzeugpflegeauftrag hinterlegte Umfang der Fahrzeugpflege von der Steuereinrichtung veränderbar ist;
- die Steuereinrichtung mit der mindestens einen Fahrzeugpflegeeinrichtung über mindestens ein Kommunikationsglied kommuniziert;
- die Steuereinrichtung eine Fahrzeugsteuereinheit und eine Planungseinheit umfasst, wobei:
- die Fahrzeugsteuereinheit zur Kommunikation mit nicht-benutzergeführten Fahrzeugen über ein Kommunikationsglied ausgestaltet ist;
- die Planungseinheit Fahrzeugpflegeaufträge koordiniert; und
- die Planungseinheit mit mindestens einer Steuereinheit, die der mindestens einen Fahrzeugpflegeeinrichtung zugeordnet ist oder von dieser umfasst ist, in Kommunikation steht, zur Übermittlung von Fahrzeugpflegeaufträgen an die mindestens eine Steuereinheit und/oder zum Empfang von Zustandsmeldungen über die mindestens eine Fahrzeugpflegeeinrichtung durch die mindestens eine Steuereinheit.

## Claims

1. A system for vehicle care, comprising:
- at least one vehicle care device (34) to which vehicles (16) are movable and from which vehicles (16) are removable; and
- a control device (50) comprising at least one communication member for communication with the at least one vehicle care device (34);
wherein:
- there is storable in the control device (50) associated with a particular vehicle (16) at least one vehicle care instruction comprising information about the care of the vehicle (16);
- the vehicles (16) are treatable at the at least one vehicle care device (34) according to the at least one vehicle care instruction; and
- the sequence of processing of vehicle care instruction and/or the scope of the vehicle care stored in at least one vehicle care instruction is changeable by the control device (50);
wherein the control device (50) comprises a vehicle control unit (54) and a planning unit (66), wherein:
- the vehicle control unit (54) is configured for communication with non-user-guided vehicles (18) through a communication member; and
- the planning unit (66):
- is configured to coordinate vehicle care instructions; and
- is in communication with at least one control unit (68), which is associated with the at least one vehicle care device (34) or is comprised thereby, in order to transmit vehicle care instructions to the at least one control unit (68) and/or to receive status notifications regarding the at least one vehicle care device (34) by the at least one control unit (68).

2. The system in accordance with Claim 1, **characterized in that** at least one of the following applies:
- a plurality of vehicle care devices (34) is provided, wherein vehicles (16) are associable with more than one vehicle care instruction for care at a corresponding vehicle care device (34);
- the sequence of processing of a plurality of vehicle care instructions associated with a vehicle (16) and/or the sequence of processing of vehicle care instructions associated with different vehicles (16) is changeable by the control device (50);
- the sequence of processing of vehicle care instructions is changeable by an operator (44) of the system (10) by means of a data processing apparatus (56);
- the sequence of processing of vehicle care instructions is definable by the control device (50) and/or by an operator (44) of the system (10);
- a scope of the vehicle care stored in at least one vehicle care instruction is changeable by an operator (44) of the system (10).

3. The system in accordance with any one of the preceding Claims, **characterized in that** at least one device for vehicle cleaning (36) is provided as vehicle care device (34).

4. The system in accordance with Claim 3, **characterized in that** at least one of the following applies:
- the device for vehicle cleaning (36) is or comprises a vehicle washing facility (38);
- the device for vehicle cleaning (36) is or comprises an interior cleaning device (40) for cleaning a vehicle interior;
- the device for vehicle cleaning (36) has at least one cleaning tool (48) managed by an operator (44), or such a tool is arranged on the device for vehicle cleaning (36).

5. The system in accordance with any one of the preceding Claims, **characterized in that** at least one of the following applies:
- a device for replenishing, changing and/or draining an operating material or replacement part of the vehicle is provided as vehicle care device (34), in particular a refueling device (42) for the vehicle, a charging device, or a replacing device for a vehicle battery;
- at least one vehicle care device (34) is configured to provide autonomous care for the vehicle (16), at least in part;
- at least one vehicle care device (34) is configured in such a way that vehicle care is provided at least in part with employment of an operator (44);
- the sequence of processing of the vehicle care instructions and/or the scope of vehicle care instructions at least at one vehicle care device (34) is determined or changed by the control device (50) with regard to achieving a high throughput of vehicles (16).

6. The system in accordance with any one of the preceding Claims, **characterized in that** the sequence of processing of vehicle care instructions and/or the scope of vehicle care instructions at least at one vehicle care device (34) is determined or changed by the control device (50) with regard to achieving at least one of the following:
- short waiting time for a vehicle (16) at the vehicle care device (34) before receiving the vehicle care;
- bringing vehicles (16) to the vehicle care device (34) with minimal congestion;
- removal of vehicles (16) from the vehicle care device (34) with minimal congestion.

7. The system in accordance with any one of the preceding Claims, **characterized in that** at least one of the following applies:
- the sequence of processing of the vehicle care instructions and/or the scope of the vehicle care stored in a vehicle care instruction is determined or changed by the control device (50) on the basis of the vehicle care instruction in respect of the result of the vehicle care;
- the sequence of processing of the vehicle care instructions, the scope of the vehicle care stored in a vehicle care instructions, times of processing of vehicle care instructions and/or the allocation of a particular vehicle care instruction to a specific vehicle care device is determinable or changeable by the control device (50) depending on information that is suppliable to the control device (50) or that is determinable thereby automatically.

8. The system in accordance with Claim 7, **characterized in that** the information is or comprises at least one of the following:
- details regarding the nature of the vehicle (16) as user-guided vehicle (20) or non-user-guided vehicle (18);
- anticipated and/or actual time of arrival of a vehicle (16) at a facility having the system;
- anticipated and/or actual time of arrival of a vehicle (16) at the at least one vehicle care device (34);
- anticipated and/or actual number of vehicles (16) requiring care;
- anticipated and/or actual duration of the processing of a vehicle care instruction at the at least one vehicle care device (34);
- capacity utilization of the at least one vehicle care device (34);
- day of the week of scheduled or performed vehicle care, wherein the scope of the vehicle care instructions at peak times is preferably reducible;
- time of day of scheduled or performed vehicle care, wherein the scope of the vehicle care instructions at peak times is preferably reducible;
- holiday times or non-holiday times;
- requirements with regard to the working hours of operator staff (44), wherein the care of user-guided vehicles (20) is preferably performable during the day and the care of non-user-guided vehicles (18) is also performable at night-time, and/or wherein preferably a vehicle care device (34) that employs an operator (44) is used during the day and an autonomous vehicle care device (34) is also usable at night-time;
- requirements with regard to operating times of the at least one vehicle care device (34), for example with regard to noise protection;
- costs for energy and consumables, in particular water, which are necessary for the operation of the at least one vehicle care device (34), wherein the vehicle care is preferably performed at times when the costs are lower;
- information regarding any servicing or maintenance times or faults of the at least one vehicle care device (34);
- information regarding any disruptions to, or limitations of public transportation or in public transport; and
- information regarding strikes or any other absences of operator staff (44) of vehicles (16) or the at least one vehicle care device (34).

9. The system in accordance with any one of the preceding Claims, **characterized in that** at least one of the following applies:
- a device for vehicle cleaning (36) is provided as vehicle care device (34), and the sequence of processing of the vehicle care instructions and/or the vehicle cleaning extent is determined with regard to achieving a basic or fundamental cleaning of the vehicles (16) or with regard to achieving a maximum cleaning performance;
- a device for vehicle cleaning (36) is provided as vehicle care device (34), and a cleaning need for the vehicle (16) is determinable with regard to storing the vehicle cleaning extent in the vehicle care instruction for need-based cleaning of the vehicle (16).

10. The system in accordance with Claim 9, **characterized in that** at least one of the following applies:
- the system has a recording device (64) for vehicles (16), which recording device in particular comprises at least one camera, and the cleaning need is determinable by the control device (50) depending on a signal of the recording device (64);
- the cleaning need is determinable by an operator (44) and is transmittable to the control device (50) by means of a data processing apparatus (56);
- the vehicle care instruction comprises the information that cleaning is not necessary if no sufficient need for this is demonstrable, or in this case the establishment of a vehicle care instruction is omitted .

11. The system in accordance with Claim 9 or 10, **characterized in that** the cleaning need is determinable by the control device (50) depending on at least one of the following:
- actual dirty state;
- vehicle type;
- vehicle age;
- time since the vehicle was last cleaned;
- distance travelled since the vehicle was last cleaned;
and/or, in particular in the case of rental vehicles,
- weather at the location of use, rental or return of the vehicle (16);
- road conditions at the location of use, rental or return of the vehicle (16);
- previous rental duration;
- next scheduled rental duration;
- last vehicle renter;
- next vehicle renter;
- status of the last or next vehicle renter as preferred or less preferred customer.

12. The system in accordance with any one of the preceding Claims, **characterized in that** at least one of the following applies:
- the control device (50) is configured for communication with autonomous vehicles (22), wherein these are movable under control by the control device (50) and/or information is transmittable from the control device (50) to the autonomous vehicles (22);
- the control device (50) is configured for communication with remote-controllable vehicles (24), wherein these are movable under control by the control device (50) and/or information is transmittable from the control device (50) to the remote-controllable vehicles (24);
- the system has data-processing apparatuses (56) for operator staff by means of which non-user-guided vehicles (18) is configured to be guided by the operators (44);
- the control device (50) is configured for communication with external data-processing apparatuses (56) managed by operator staff (44) or arranged in the vehicles (16) in order to transmit instructions for executing the vehicle care orders with employment of an operator (44), in particular for guiding user-guided vehicles (20);
- the system (10) has at least one transport device (58), by means of which a vehicle (16) is movable to and/or is collectable from at least one vehicle care device (34), wherein the at least one transport device (58) is in communication with the control device (50) and is controllable thereby.

13. The system in accordance with any one of the preceding Claims, **characterized in that** the system (10) comprises a detection device (60) coupled to the control device (50) for determining a vehicle position.

14. The system in accordance with Claim 13, **characterized in that** at least one of the following applies:
- the detection device (60) has sensor elements (62) for detecting the vehicles (16), preferably without contact;
- the detection device (60) and/or the control device (50) is in communication with position-determining elements arranged in the vehicles (16).

15. The system in accordance with Claim 14, **characterized in that** the sensor elements (62):
- are or comprise cameras, by means of which the vehicles (16), the registration numbers thereof and/or other characterizing elements comprised by the vehicles are optically detectable; and/or
- are or comprise wireless elements for locating vehicles (16) by means of a wireless connection, for example by means of RFID technology or Bluetooth technology.

16. The system in accordance with any one of the preceding Claims, **characterized in that** at least one of the following applies:
- the system (10) comprises a central control device (50) or a spatially distributed control device (50) having a plurality of data processing units;
- a report about scheduled and/or processed vehicle care instructions is establishable by the control device (50);
- the system (10) comprises at least one transfer device (26, 28) for receiving of the vehicle (16) by the system (10) from a vehicle user and/or for transfer of the vehicle (16) from the system (10) to a vehicle user;
- the system (10) comprises an area (14) in which there are arranged at least the at least one vehicle care device (34) and parking spaces (32) for vehicles (16) for the temporary parking of vehicles (16).

17. Use of a system in accordance with any one of the preceding Claims at a vehicle rental location (12), a car dealership, a service station, a vehicle cleaning station, a parking station, a car-sharing station, a company vehicle station or fleet, or a gas station.

18. A method for vehicle care using a system in accordance with any one of Claims 1 to 16, in which:
- at least one vehicle care instructions associated with a particular vehicle and comprising information about the care of a vehicle is storable in the control device;
- the vehicles are brought to the at least one vehicle care device depending on the at least one vehicle care instruction, receive care at said vehicle care device in accordance with the vehicle care order, and are removed from said vehicle care device;
- the sequence of processing of vehicle care instructions and/or the scope of the vehicle care stored in at least one vehicle care instructions is changeable by the control device;
- the control device communicates with the at least one vehicle care device, via at least one communication member;
- the control device comprises a vehicle control unit and a planning unit, wherein:
- the vehicle control unit is configured for communication with non-user-guided vehicles through a communication member;
- vehicle care instructions are configured to be coordinated by the planning unit; and
- the planning unit is in communication with at least one control unit, which is associated with the at least one vehicle care device or is comprised thereby, in order to transmit vehicle care instructions to the at least one control unit and/or to receive status notifications regarding the at least one vehicle care device by the at least one control unit.

## Revendications

1. Système d'entretien de véhicules comprenant:
- au moins un dispositif d'entretien de véhicules (34) auquel des véhicules (16) peuvent être amenés et duquel des véhicules (16) peuvent être retirés; et
- un dispositif de commande (50) qui comprend au moins un membre de communication pour communiquer avec le au moins un dispositif d'entretien de véhicules (34);
où:
- au moins un ordre d'entretien de véhicules affecté à un véhicule (16) respectif comprenant des informations sur l'entretien du véhicule (16) peut être déposé dans le dispositif de commande (50);
- les véhicules (16) peuvent être traités dans le au moins un dispositif d'entretien de véhicules (34) en fonction d'au moins un ordre d'entretien de véhicules; et
- la succession de l'exécution d'ordres d'entretien de véhicules et/ou l'étendue de l'entretien de véhicule déposée dans au moins un ordre d'entretien de véhicules est modifiable par le dispositif de commande (50);
où le dispositif de commande (50) comprend une unité de commande de véhicule (54) et une unité de planification (66), où:
- l'unité de commande de véhicule (54) est configurée pour communiquer avec des véhicules non conduits par l'utilisateur (18) via un membre de communication; et
- l'unité de planification (66):
- est agencée pour la coordination d'ordres d'entretien des véhicules; et
- est en communication avec au moins une unité de commande (68), qui est affectée au au moins un dispositif d'entretien de véhicules (34) ou est comprise par celui-ci, pour la transmission d'ordres d'entretien de véhicules à la au moins une unité de commande (68) et/ou pour la réception de notifications d'état concernant le au moins un dispositif d'entretien de véhicules (34) par la au moins une unité de commande (68).

2. Système selon la revendication 1, **caractérisé en ce qu'**au moins l'un des suivants s'applique:
- une pluralité de dispositifs d'entretien de véhicules (34) est prévue, où plus d'un ordre d'entretien de véhicules pour l'entretien dans un dispositif d'entretien de véhicules respectif (34) peut être affecté à des véhicules (16);
- la succession de l'exécution de plusieurs ordres d'entretien de véhicules affectés à un véhicule (16) et/ou la succession de l'exécution d'ordres d'entretien de véhicules affectés à des véhicules (16) différents peut être modifiée par le dispositif de commande (50) ;
- la succession de l'exécution d'ordres d'entretien de véhicules peut être modifiée par un opérateur (44) du système (10) à l'aide d'un appareil de traitement de données (56);
- la succession de l'exécution d'ordres d'entretien de véhicules peut être établie par le dispositif de commande (50) et/ou par un opérateur (44) du système (10);
- une étendue de l'entretien de véhicules déposée dans au moins un ordre d'entretien de véhicules peut être modifiée par un opérateur (44) du système (10).

3. Système selon l'une des revendications précédentes, **caractérisé en ce qu'**au moins un dispositif de nettoyage de véhicules (36) est prévu en tant que dispositif d'entretien de véhicules (34).

4. Système selon la revendication 3, **caractérisé en ce qu'**au moins l'un des suivants s'applique:
- le dispositif de nettoyage de véhicules (36) est ou comprend une installation de lavage de véhicules (38);
- le dispositif de nettoyage de véhicules (36) est ou comprend un dispositif de nettoyage d'habitacle (40) pour nettoyer un habitacle de véhicule;
- le dispositif de nettoyage de véhicules (36) présente au moins un outil de nettoyage (48) conduit par un opérateur (44) ou un tel outil est disposé sur le dispositif de nettoyage de véhicules (36).

5. Système selon l'une des revendications précédentes, **caractérisé en ce qu'**au moins l'un des suivants s'applique:
- un dispositif pour remplir, changer et/ou retirer un carburant ou un consommable du véhicule est prévu en tant que dispositif d'entretien de véhicules (34), en particulier un dispositif de ravitaillement en carburant (42) pour le véhicule, un dispositif de charge ou un dispositif de remplacement pour une batterie de véhicule;
- au moins un dispositif d'entretien de véhicules (34) est configuré au moins en partie pour l'entretien autonome du véhicule (16);
- au moins un dispositif d'entretien de véhicules (34) est configuré de telle manière qu'un entretien du véhicule a lieu au moins en partie à l'aide d'un opérateur (44);
- la succession de l'exécution des ordres d'entretien de véhicules et/ou l'étendue des ordres d'entretien de véhicules au niveau d'au moins un dispositif d'entretien de véhicules (34) est déterminée ou modifiée par le dispositif de commande (50) en considération d'un débit élevé de véhicules (16).

6. Système selon l'une des revendications précédentes, **caractérisé en ce que** la succession de l'exécution des ordres d'entretien des véhicules et/ou l'étendue des ordres d'entretien de véhicules au niveau d'au moins un dispositif d'entretien des véhicules (34) est déterminée ou modifiée par le dispositif de commande (50) en considération d'au moins l'un des suivants:
- un court temps d'attente pour un véhicule (16) au niveau du dispositif d'entretien de véhicules (34) avant le début de l'entretien de véhicule;
- un transport de véhicules (16) jusqu'au dispositif d'entretien de véhicules (34) avec le moins d'encombrement possible;
- un retrait de véhicules (16) du dispositif d'entretien de véhicules (34) avec le moins d'encombrement possible.

7. Système selon l'une des revendications précédentes, **caractérisé en ce qu'**au moins l'un des suivants s'applique:
- la succession de l'exécution des ordres d'entretien de véhicules et/ou l'étendue de l'entretien de véhicule déposée dans un ordre d'entretien de véhicules est déterminée ou modifiée par le dispositif de commande (50) sur la base de l'ordre d'entretien de véhicules en considération du résultat de l'entretien du véhicule;
- la succession de l'exécution des ordres d'entretien de véhicules, l'étendue de l'entretien du véhicule déposée dans un ordre d'entretien de véhicules, les moments de l'exécution des ordres d'entretien de véhicules et/ou l'affectation d'un ordre d'entretien de véhicules respectif à un dispositif d'entretien de véhicules déterminé peuvent être déterminés ou modifiés par le dispositif de commande (50) en fonction d'informations pouvant être transmises au dispositif de commande (50) ou pouvant être déterminées automatiquement par celui-ci.

8. Système selon la revendication 7, **caractérisé en ce que** les informations sont ou comprennent au moins l'une des suivantes:
- des indications sur la nature du véhicule (16) en tant que véhicule conduit par l'utilisateur (20) ou véhicule non conduit par l'utilisateur (18);
- le moment d'arrivée attendu et/ou réel d'un véhicule (16) dans une installation disposant du système;
- le moment d'arrivée attendu et/ou réel d'un véhicule (16) au au moins un dispositif d'entretien de véhicules (34);
- le nombre attendu et/ou réel de véhicules (16) à entretenir;
- la durée attendue et/ou réelle de l'exécution d'un ordre d'entretien de véhicules dans le au moins un dispositif d'entretien de véhicules (34);
- la charge du au moins un dispositif d'entretien de véhicules (34);
- le jour de semaine d'un entretien de véhicule planifié ou réalisé, où l'étendue des ordres d'entretien de véhicules peut de préférence être réduite aux heures de pointe;
- le moment de la journée d'un entretien de véhicule planifié ou réalisé, où l'étendue des ordres d'entretien de véhicules peut de préférence être réduite aux heures de pointe;
- les périodes de vacances ou périodes de non-vacances;
- les obligations concernant les horaires de travail des opérateurs (44), où de préférence l'entretien de véhicules conduits par les utilisateurs (20) peut être réalisé pendant la journée et l'entretien des véhicules non conduits par les utilisateurs (18) peut être réalisé également la nuit et/ou où de préférence un dispositif d'entretien de véhicules (34) est utilisé de jour avec l'aide d'un opérateur (44) et un dispositif d'entretien de véhicules autonome (34) peut également être utilisé de nuit;
- les obligations concernant les temps de fonctionnement du au moins un dispositif d'entretien de véhicules (34), par exemple en ce qui concerne la protection contre le bruit;
- les coûts de l'énergie et des consommables, en particulier de l'eau, qui sont nécessaires au fonctionnement du au moins un dispositif d'entretien de véhicules (34), où l'entretien des véhicules est réalisé de préférence à des moments de faibles coûts;
- des informations concernant des temps de service ou d'entretien ou des perturbations éventuelles du au moins un dispositif d'entretien de véhicules (34);
- des informations concernant des perturbations ou restrictions éventuelles du fonctionnement de moyens de transport publics ou dans les transports publics; et
- des informations concernant des grèves ou des défaillances déterminées autrement d'opérateurs (44) de véhicules (16) ou du au moins un dispositif d'entretien des véhicules (34).

9. Système selon l'une des revendications précédentes, **caractérisé en ce qu'**au moins l'un des suivants s'applique:
- un dispositif de nettoyage de véhicules (36) est prévu en tant que dispositif d'entretien de véhicules (34) et la succession de l'exécution des ordres d'entretien de véhicules et/ou l'étendue du nettoyage de véhicule est déterminée en considération d'un nettoyage de base ou approfondi des véhicules (16) ou en considération de performances de nettoyage maximales;
- un dispositif de nettoyage de véhicule (36) est prévu comme dispositif d'entretien de véhicules (34) et un besoin de nettoyage pour le véhicule (16) peut être déterminé en considération du dépôt d'une étendue du nettoyage de véhicule dans l'ordre d'entretien de véhicules pour le nettoyage du véhicule (16) selon les besoins.

10. Système selon la revendication 9, **caractérisé en ce qu'**au moins l'un des suivants s'applique:
- le système comporte un dispositif de détection (64) pour les véhicules (16), qui comprend en particulier au moins une caméra, et le besoin de nettoyage par le dispositif de commande (50) dépend d'un signal du dispositif de détection (64);
- le besoin de nettoyage peut être déterminé par un opérateur (44) et peut être transmis au dispositif de commande (50) au moyen d'un appareil de traitement de données (56);
- l'ordre d'entretien de véhicules comprend l'information qu'un nettoyage n'est pas nécessaire quand aucun besoin suffisant ne peut être établi, ou dans ce cas l'établissement d'un ordre d'entretien de véhicules n'est pas applicable.

11. Système selon la revendication 9 ou 10, **caractérisé en ce que** le besoin de nettoyage peut être déterminé par le dispositif de commande (50) en fonction d'au moins l'un des suivants:
- l'état de salissure réel;
- le type de véhicule;
- l'âge du véhicule;
- le temps écoulé depuis le dernier nettoyage;
- le kilométrage depuis le dernier nettoyage;
et/ou, en particulier dans le cas de véhicules de location:
- la météo sur le lieu d'utilisation, de location ou de remise du véhicule (16);
- l'état des routes sur le lieu d'utilisation, de location ou de remise du véhicule (16);
- la période de location précédente;
- la période de location suivante prévue;
- le dernier locataire de véhicule;
- le prochain locataire de véhicule;
- l'attribut du dernier ou du prochain locataire de véhicule en tant que client préféré ou moins préféré.

12. Système selon l'une des revendications précédentes, **caractérisé en ce qu'**au moins l'un des suivants s'applique:
- le dispositif de commande (50) est configuré pour communiquer avec des véhicules autonomes (22), où ceux-ci peuvent être déplacés sous la commande par le dispositif de commande (50) et/ou des informations peuvent être transmises du dispositif de commande (50) au véhicules autonomes (22);
- le dispositif de commande (50) est configuré pour communiquer avec des véhicules télécommandables (24), où ceux-ci peuvent être déplacés sous la commande par le dispositif de commande (50) et/ou des informations peuvent être transmises du dispositif de commande (50) aux véhicules télécommandables (24);
- le système comporte des appareils de traitement de données (56) pour les opérateurs, par l'intermédiaire desquels les véhicules non conduits par l'utilisateur (18) peuvent être conduits par les opérateurs (44);
- le dispositif de commande (50) est configuré pour communiquer avec des dispositifs de traitement de données externes (56) actionnés par des opérateurs (44) ou disposés dans les véhicules (16) pour la transmission d'instructions pour exécuter les ordres d'entretien des véhicules à l'aide d'un opérateur (44), en particulier pour la conduite de véhicules conduits par l'utilisateur (20);
- le système (10) comprend au moins un dispositif de transport (58) avec lequel un véhicule (16) peut être amené à et/ou retiré du au moins un dispositif d'entretien de véhicules (34), où le au moins un dispositif de transport (58) est en communication avec le dispositif de commande (50) et peut être commandé par celui-ci.

13. Système selon l'une des revendications précédentes, **caractérisé en ce que** le système (10) comprend un dispositif de détection (60) couplé au dispositif de commande (50) pour déterminer une position du véhicule.

14. Système selon la revendication 13, **caractérisé en ce qu'**au moins l'un des suivants s'applique:
- le dispositif de détection (60) comporte des éléments capteurs (62) pour la détection de préférence sans contact des véhicules (16);
- le dispositif de détection (60) et/ou le dispositif de commande (50) sont en communication avec des éléments de détermination de position disposés dans les véhicules (16).

15. Système selon la revendication 14, **caractérisé en ce que** les éléments capteurs (62):
- sont ou comprennent des caméras, par l'intermédiaire desquelles les véhicules (16), leurs plaques d'immatriculation et/ou d'autres types d'éléments d'identification inclus dans les véhicules peuvent être détectés optiquement; et/ou
- sont ou comprennent des éléments radio pour localiser des véhicules (16) par le biais d'une liaison radio, par exemple au moyen d'une technologie RFID ou de la technologie Bluetooth.

16. Système selon l'une des revendications précédentes, **caractérisé en ce qu'**au moins l'un des suivants s'applique:
- le système (10) comprend un dispositif de commande central (50) ou un dispositif de commande spatialement distribué (50) présentant une pluralité d'unités de traitement de données;
- un rapport sur des ordres d'entretien de véhicules prévus et/ou exécutés peut être généré par le dispositif de commande (50);
- le système (10) comprend au moins un dispositif de remise (26, 28) pour la réception du véhicule (16) par le système (10) d'un utilisateur de véhicule et/ou pour la remise du véhicule (16) du système (10) à un utilisateur de véhicule;
- le système (10) comprend une zone (14) sur laquelle sont disposés au moins le au moins un dispositif d'entretien de véhicules (34) et des places de stationnement (32) pour véhicules (16) pour garer temporairement les véhicules (16).

17. Utilisation d'un système selon l'une des revendications précédentes dans une station de location de véhicules (12), une concession automobile, un relais routier, une station de nettoyage de véhicules, une station de stationnement, une station d'autopartage, une station ou flotte de véhicules de société ou une station-service.

18. Procédé d'entretien de véhicules avec un système selon l'une des revendications 1 à 16, dans lequel:
- au moins un ordre d'entretien de véhicules affecté à un véhicule respectif comprenant des informations sur l'entretien du véhicule peut être déposé dans le dispositif de commande;
- en fonction du au moins un ordre d'entretien de véhicule, les véhicules sont amenés au au moins un dispositif d'entretien de véhicule, entretenus dans celui-ci conformément à l'ordre d'entretien de véhicules et retirés de celui-ci;
- la succession de l'exécution d'ordres d'entretien de véhicules et/ou l'étendue de l'entretien du véhicule déposée dans au moins un ordre d'entretien de véhicules peut être modifiée par le dispositif de commande;
- le dispositif de commande communique avec le au moins un dispositif d'entretien de véhicules par le biais d'au moins un membre de communication;
- le dispositif de commande comprend une unité de commande de véhicule et une unité de planification, où:
- l'unité de commande de véhicule est configurée pour communiquer avec des véhicules non conduits par l'utilisateur par le biais d'un membre de communication;
- l'unité de planification coordonne les ordres d'entretien des véhicules; et
- l'unité de planification est en communication avec au moins une unité de commande qui est affectée à ou est comprise par le au moins un dispositif d'entretien de véhicules, pour la transmission des ordres d'entretien de véhicules à la au moins une unité de commande et/ou pour la réception de notifications d'état concernant le au moins un dispositif d'entretien de véhicules par la au moins une unité de commande.
